(19) Europäisches Patentamt
European Patent Office
Office européen des brevets

(11) **EP 1 912 210 A1**

(12) **EUROPEAN PATENT APPLICATION**
published in accordance with Art. 153(4) EPC

(43) Date of publication:
**16.04.2008 Bulletin 2008/16**

(51) Int Cl.:
***G11B 7/005*** *(2006.01)*  ***G11B 20/10*** *(2006.01)*
***G11B 20/12*** *(2006.01)*

(21) Application number: **05768459.9**

(22) Date of filing: **03.08.2005**

(86) International application number:
**PCT/JP2005/014228**

(87) International publication number:
**WO 2007/015298 (08.02.2007 Gazette 2007/06)**

(84) Designated Contracting States:
**DE FR**

(71) Applicant: **Fujitsu Ltd.**
**Kawasaki-shi, Kanagawa 211-8588 (JP)**

(72) Inventor: **MORIMOTO, Yasuaki,**
**c/o FUJITSU LIMITED**
**Kawasaki-shi, Kanagawa 2118588 (JP)**

(74) Representative: **Seeger, Wolfgang**
**Seeger & Seeger Patentanwälte**
**Georg-Hager-Straße 40**
**D-81369 München (DE)**

(54) **OPTICAL INFORMATION RECORDING AND REPRODUCING DEVICE, AND OPTICAL INFORMATION RECORDING MEDIUM**

(57)    In an optical information recording/reproducing apparatus, an optical pickup unit (100) acquires access-restriction codes (number of reproductions, number of copies, effective period, and end date) under control of a controller (300). The controller (300) determines whether it is permitted to reproduce information recorded on the RAM data-layer based on acquired access access-restriction codes (number of reproductions, number of copies, effective period, and end date). When the reproduction is permitted, the controller (300) sends the information recorded on the RAM data-layer to a host computer (400).

**FIG.8**

**Description**

TECHNICAL FIELD

The present invention relates to an optical information recording/reproducing apparatus that records or reproduces information onto or from an optical information recording medium by emitting a light beam to the optical information recording medium. More specifically, the present invention relates to an optical information recording/reproducing apparatus and an optical information recording medium that can prevent falsification of restriction information recorded on its ROM area but can receives a change of the restriction information from an authorized administrator in a flexible manner.

BACKGROUND ART

Contents, for example, text data, still image data, video data, audio data, and program data can be recorded for sale on a removable medium such as a compact disk (including CD-R and CD-RW) or a DVD (including DVD±RW and DVD-RAM). To protect copyright of contents of movie, music, program, or the like that are recorded on such a removable medium, there proposed a technique of preventing rewriting or falsification despite intension of the recorder thereby preventing illegal copy by un-authorized third parties. Such a technique includes music CD-ROMs with copy protection.

There have been made active studies and developments for achieving high-density recording or highspeed access concerning removable media or drives (devices for recording information onto a removable medium and/or for reproducing information from the removable medium). Among the studies and developments, there has been disclosed a concurrent ROMRAM that includes a read-only ROM (Read Only Memory) unit and a write-once RAM (Random Access Memory) unit (see, for example, Patent document 1) and a hybrid-type removable medium such as a partial ROM, and a drive that can accept those removable media.

There has been also disclosed a conventional technique for targeting the hybrid-type removable media represented by the above-described concurrent ROMRAM to prevent rewriting against recorder's intention or falsification thereby preventing illegal copy by un-authorized third parties.

Patent document 2 or 3, for example, discloses an optical disk that includes a ROM area on which information unique to the disk is recorded and a write-once RAM area. Contents are recorded on either the ROM area or the RAM area. If contents that are recorded on the optical disk according to each of the Patent documents are copied to another optical disk, because unique information of the copy-destination optical disk is different from that of the copy-source optical disk or no unique information is recorded on the ROM area of the copy-destination optical disk, it is impossible to use the contents recorded on the RAM area. This makes it possible to prevent rewriting against recorder's intention or falsification thereby preventing illegal copy by un-authorized third parties. An optical disk according to Patent document 3 records a security signature containing a user secret key on the RAM area. To write new contents onto the RAM area, a public-key based authentication and encryption is performed via a network.

Patent document 1: Japanese Patent Application Laid-open No. H6-202820
Patent document 2: Japanese Patent Application Laid-open No. 2003-36595
Patent document 3: Japanese Patent Application Laid-open No. 2003-115163

DISCLOSURE OF INVENTION

PROBLEM TO BE SOLVED BY THE INVENTION

However, because the ROM area of the concurrent ROMRAM or the like is formed with un-rewritable optical-phase pits according to the above-described conventional techniques, there is a problem that even an authorized administrator of the concurrent ROMRAM cannot rewrite information that is recorded on the ROM area (for example, restriction information for restricting reproducing of information recorded on the RAM area).

Therefore, to change restriction information or the like that is recorded on the ROM area, there required to create a new stamper for recording information on the ROM area, that is, to create a new concurrent ROMRAM from a substrate made of, for example, a polycarbonate. As a result, change of information recorded on the ROM area requires long time and large costs.

For the above-described reason, it is difficult to change information that is recorded on the ROM area of the concurrent ROMRAM in a flexible manner. This causes another problem of restricting an available field of the concurrent ROMRAM.

The present invention has been achieved to solve the above problems in the conventional technology and it is an object of the present invention to provide an optical information recording/reproducing apparatus and an optical information recording medium that can prevent falsification of restriction information recorded on its ROM area but can receives a change of the restriction information from an authorized administrator in a flexible manner.

MEANS FOR SOLVING PROBLEM

To solve the problems and to achieve the object, the present invention is an optical information recording/ reproducing apparatus for recording or reproducing information on or from an optical information recording medium by emitting a light beam to the optical information recording medium, the optical information recording medium including a first recording layer on which information is recorded and a second recording layer on which restriction information is recorded, the restriction information being used for restricting output of the information recorded on the first recording layer. The optical information recording/reproducing apparatus includes an acquiring unit that acquires the information recorded on the first recording layer and the restriction information corresponding to the information at one time; and a determining unit that determines, based on the restriction information acquired by the acquiring unit, whether the information acquired by the acquiring unit from the first recording layer is to be output.

In the invention, the restriction information includes number-of-reproduction information indicative of a permitted number of reproductions of the information recorded on the first recording layer, and the invention further includes an updating unit that updates, when the determining unit determines that the information recorded on the first recording layer is to be output, the number-of-reproduction information of the restriction information that is recorded on the second recording layer corresponding to output information.

In the invention, the restriction information includes number-of-copy information indicative of a permitted number of copies of the information recorded on the first recording layer, and the invention further includes an updating unit that updates, when the determining unit determines that the information recorded on the first recording layer is to be output, the number-of-copy information of the restriction information recorded on the second recording layer corresponding to output information.

In the invention, the restriction information includes output-period information indicative of a period in which the information recorded on the first recording layer is permitted to be output.

In the invention, the restriction information includes end-time information indicative of an end time which the information recorded on the first recording layer is permitted to be output.

The invention further includes an updating unit that updates the output-period information and/or the end-time information.

The present invention is an optical information recording/reproducing apparatus for recording or reproducing information on or from an optical information recording medium by emitting a light beam to the optical information recording medium, the optical information recording medium including a first recording layer on which sample information is recorded and a second recording layer on which information corresponding to the sample information recorded on the first recording layer is recorded. The invention includes an information acquiring unit that acquires, when receiving a request for acquiring the information corresponding to the sample information recorded on the first recording layer, the information corresponding to the requested sample information; and a recording unit that records information acquired by the information acquiring unit, in association with the sample information recorded, on the first recording layer on a recording area of the second recording layer.

In the invention, sample information and address information are recorded on the first recording layer, the sample information being a sample of music, video, and/or image, the address information indicating a location where regular information corresponding to the sample information is recorded, the information acquiring unit acquires the regular information concerning the sample information based on the address information, and the recording unit records the regular information acquired by the information acquiring unit, in association with the sample information recorded on the first recording layer, on the recording area of the second recording layer.

In the invention, restriction information is recorded on the first recording layer, the restriction information being used for restricting the information recorded on the second recording layer to be output, and the invention further includes a determining unit that determines based on the restriction information, when receiving a request for outputting the information recorded on the second recording layer, whether to permit the information recorded on the second recording layer to be output.

The present invention is an optical information recording medium on which information is recorded by using interference of light beams, and includes a first recording layer on which the information is recorded; and a second recording layer on which restriction information is recorded, the restriction information being used for restricting output of the information recorded on the first recording layer in a recording area thereof that is accessed together with the information recorded on the first recording layer.

In the invention, the restriction information includes at least one of number-of-reproduction information indicative of a permitted number of reproductions of the information recorded on the first recording layer, number-of-copy information indicative of a permitted number of copies of the information recorded on the first recording layer, output-period information indicative of a period in which the information recorded on the first recording layer is permitted to be output, and end-time information indicative of an end time which the information recorded on the first recording layer is permitted to be output.

The present invention is an optical information recording medium on which information is recorded by using interference of light beams, and includes a first recording layer on which sample information and address information are recorded, the address information indicating a location where regular information corresponding to the sample information is recorded; and a second recording layer on which the regular information corresponding to the sample information recorded on the first recording layer is recorded.

In the invention, the sample information is a sample of music, video, and/or image.

In the invention, restriction information is recorded on the first recording layer, the restriction information being used for restricting output of the information recorded on the second recording layer.

EFFECT OF THE INVENTION

According to an aspect of the present invention, an optical information recording/reproducing apparatus acquires information that is recorded on a first recording layer together with restriction information corresponding to the information recorded on a second recording layer, and determines whether the information recorded on the first recording layer is to be output based on the acquired restriction information. This makes it possible to improve reliability of information recorded on the optical information recording medium.

Moreover, the restriction information contains number-of-reproduction information. When the information recorded on the first recording layer is output based on the restriction information, the optical information recording/reproducing apparatus updates the number-of-reproduction information that is contained in the restriction information. As a result, it is possible to restrict output of the information that is recorded on the first recording layer in an effective manner.

Furthermore, the restriction information contains number-of-copy information. When the information recorded on the first recording layer is output based on the restriction information, the optical information recording/reproducing apparatus updates the number-of-copy information that is contained in the restriction information. As a result, it is possible to restrict output of the information that is recorded on the first recording layer in an effective manner.

Moreover, the restriction information contains output-period information indicative of a period within which output of the information recorded on the second recording layer is allowable. Because the information recorded on the first recording layer is output based on the restriction information, the optical information recording/reproducing apparatus can restrict output of the information that is recorded on the first recording layer in an effective manner.

Furthermore, the restriction information contains end-time information for permitting output of the information that is recorded on the second recording layer. Because the information recorded on the first recording layer is output based on the restriction information, the optical information recording/reproducing apparatus can restrict output of the information that is recorded on the first recording layer in an effective manner.

Moreover, because the optical information recording/reproducing apparatus updates the output-period information the end-time information contained in the restriction information, it is possible to perform output restriction of the information recorded on the first recording layer in a flexible manner that satisfies its purpose.

Furthermore, upon receiving a request for acquiring information corresponding to sample information recorded on the first recording layer, the optical information recording/reproducing apparatus acquires the information corresponding to the sample information, and records the acquired information corresponding to the sample information on the second recording layer. This facilitates management of the sample information and the information corresponding to the sample information.

Moreover, the sample information and the address information are recorded on the first recording layer, and the optical information recording/reproducing apparatus acquires regular information corresponding to the sample information based on the address information, and records acquired information on the second recording layer. This makes it possible to record the regular information corresponding to the sample information on the second recording layer with an easy operation.

Furthermore, the first recording layer records thereon restriction information for restricting output of information that is recorded on the second recording layer. The optical information recording/reproducing apparatus restricts output of the information recorded on the second recording layer based on the restriction information, which improves reliability of the information recorded on the second recording layer.

Moreover, an optical information recording medium includes a first recording layer for recording information and restriction information containing information for restricting output of the information recorded on the first recording layer. The restriction information is recorded on a recording area to be accessed together with information that is recorded the first recording layer. This makes it possible to access information recorded on the first recording layer together with information recorded on the second recording layer and to improve reliability of information recorded on the first recording layer.

Furthermore, because the information recorded on the second recording layer includes number-of-reproduction information, number-of-copy information, output-period information, or end-time information for permitting output of information, it is possible to restrict the information recorded on the first recording layer in an appropriate manner.

Moreover, in the optical information recording medium, the sample information and the address information are recorded on the first recording layer, and regular information corresponding to sample information is recorded on the second recording layer in a manner corresponding to the sample information. This facilitates management of the sample information and the regular information.

Furthermore, in the optical information recording medium, music, movie and/or image data is recorded on the first recording layer as sample information, and the regular information corresponding to the sample information is recorded on the second recording layer. This facilitates management of the sample information and the regular information.

Moreover, in the optical information recording medium, the restriction information containing information for restricting output of information that is recorded on the second recording layer is recorded on the first recording layer. This makes it possible to improve reliability of information that is recorded on the second recording layer.

BRIEF DESCRIPTION OF DRAWINGS

[Fig. 1] Fig. 1 is a diagram of a spatial light modulation element that is provided with an optical information recording device for generating a record light and a reference light.

[Fig. 2] Fig. 2 is a diagram for explaining a modulated state of a light beam passing through a plurality of segments of the spatial light modulation element shown in Fig. 1.

[Fig. 3] Fig. 3 is a diagram for explaining a principle of an optical information recording process according to the present invention.

[Fig. 4] Fig. 4 is a diagram for explaining the structure of the spatial light modulation element shown in Fig. 1.

[Fig. 5] Fig. 5 is a diagram for explaining the structure of an optical-phase correction element.

[Fig. 6-1] Fig. 6-1 is a diagram of a state of liquid crystal molecules at the time when the optical-phase correction element is in an OFF state.

[Fig. 6-2] Fig. 6-2 is a diagram of a state of the liquid crystal molecules at the time when the optical-phase correction element is in an ON state.

[Fig. 7] Fig. 7 is a graph of a relation between an applied voltage applied to a spatial-light-intensity modulation element and the transmittance of a light beam.

[Fig. 8] Fig. 8 is a functional block diagram for explaining structure of an optical information recording/reproducing apparatus according to the present embodiment.

[Fig. 9] Fig. 9 is an exemplary functional block diagram for explaining structure of an optical pickup unit.

[Fig. 10] Fig. 10 is a diagram for explaining structure of a conjugate focus conversion lens 44 shown in Fig. 9.

[Fig. 11] Fig. 11 is a diagram for explaining structure of an optical information recording medium according to the present embodiment (in which address information and access-restriction code are recorded as non-rewritable optical-phase pits).

[Fig. 12] Fig. 12 is a diagram for explaining structure of the optical information recording medium according to the present embodiment (of which the access-restriction code is recorded on a rewritable area).

[Fig. 13] Fig. 13 is an explanatory diagram (1) for explaining a relation between a light beam and units that form the optical information recording medium.

[Fig. 14] Fig. 14 is an explanatory diagram (2) for explaining a relation between the light beam and the units that form the optical information recording medium.

[Fig. 15] Fig. 15 is an exemplary diagram of an IC card shown in Fig. 8.

[Fig. 16-1] Fig. 16-1 is an explanatory diagram (1) for explaining a relation between the access-restriction code recorded on a ROM data-layer and user data recorded on a RAM data-layer.

[Fig. 16-2] Fig. 16-2 is an explanatory diagram (2) for explaining a relation between the access-restriction code recorded on a ROM data-layer and user data recorded on a RAM data-layer.

[Fig. 16-3] Fig. 16-3 is an explanatory diagram (3) for explaining a relation between the access-restriction code recorded on a ROM data-layer and user data recorded on a RAM data-layer.

[Fig. 17] Fig. 17 is an explanatory diagram for explaining correspondence relation between a plurality of ROM data-layers and RAM data-layers in which the ROM data-layers lie in the depth direction of the optical information recording medium.

[Fig. 18] Fig. 18 is an explanatory diagram for explaining correspondence relation between a ROM data-layer and a RAM-data layer of an optical information recording medium when contents acquired via the Internet are recorded thereon.

[Fig. 19] Fig. 19 is an exemplary diagram for explaining a data array when a copy-protection code is embedded into a sample shown in Fig. 18.

[Fig. 20] Fig. 20 is an explanatory diagram for explaining a ROM data-layer and a RAM data-layer of another optical information recording medium in which contents, e.g., music or movie contents, is recorded on its RAM data-layer in its initial state.

EXPLANATIONS OF LETTERS OR NUMERALS

| | |
|---|---|
| 10 | Spatial light modulation element |
| 11 | Segment |
| 12 | Segment boundary |
| 13 | Lens aperture |
| 14 | ON segment |
| 15 | OFF segment |
| 20 | Spatial-light-intensity modulation element |
| 21 | Optical-phase correction element |
| 30, 34 | Polarizing plate |
| 31, 33 | Glass substrates |
| 32 | Liquid crystal |
| 33a | TFT counter electrode |
| 35 | Liquid crystal molecule |
| 40 | Short-wavelength laser |
| 41 | Collimator lens |
| 42 | 1/2-wavelength plate |
| 43 | Polarization conversion element |
| 44 | Conjugate focus conversion lens |
| 45 | Half mirror cube |
| 46 | Polarization beam splitter |
| 47 | Objective lens |
| 48 | Polarizer |
| 49 | Convergent lens |
| 50 | Optical information recording medium |
| 51 | Pinhole |
| 52 | Magnifying lens |
| 53 | CMOS sensor |
| 54 | Detection lens |
| 55 | Photo-detector |
| 60 | First conjugate focus conversion lens |
| 61 | Second conjugate focus conversion lens |
| 62 | Push-pull mechanism |
| 63 | Transparent substrate |
| 100, 200 | Optical pickup unit |

| | |
|---|---|
| 110, 210 | Laser-power monitoring/controlling unit |
| 120, 220 | objective-lens/optical-head position controlling unit |
| 130, 230 | ROM-information data splitting unit |
| 140, 240 | Servo-signal detecting unit |
| 150, 250 | Address-information detecting unit |
| 160, 260 | Access-restriction code-data detecting unit |
| 270 | Spatial light-modulator drive-controlling unit |
| 280 | RAM information data detecting unit |
| 300 | Controller |
| 310 | Access-restriction code-data generating unit |
| 320 | Comparing unit |
| 330 | Key unique-code detecting unit |

| 340 | IC card |
| 400 | Host computer |
| 501, 503, 505, 507 | Protective layer |
| 502 | Transparent substrate |
| 504 | Recording layer |
| 506, 508 | Semi-transparent reflective layer |
| 509 | Semi-transparent resin |
| 510 | Reflective layer |
| 511 | Substrate |
| 512, 513 | Access-restriction code recording layer |

BEST MODE(S) FOR CARRYING OUT THE INVENTION

An optical information recording/reproducing apparatus and an optical information recording medium according to exemplary embodiments of the present invention are described in detail below with reference to the accompanying drawings. The present invention is not limited to these exemplary embodiments.

Embodiment

Features of the optical information recording/reproducing apparatus and the optical information recording medium according to the present embodiment are described. The optical information recording medium according to the present embodiment includes a ROM area formed with a ROM (Read Only Memory) data-layer and a RAM area formed with a RAM (Random Access Memory) data-layer. The ROM area records thereon access-restriction codes for restricting reading and/or writing information. When the optical information recording/reproducing apparatus read or write information from or to the RAM area, reading or writing information is restricted based on an access-restriction code in the ROM area corresponding to the information, and a host computer is notified of only presence of the RAM data-layer.

The access-restriction codes includes, for example, number-of-reproduction information that is a permitted number of reproductions of information that is recorded on the RAM data-layer, number-of-copy information that is a permitted count of copies of information that is recorded on the RAM data-layer, reproduction-period information that is a period for permitting reproduction of information that is recorded on the RAM data-layer, and end-time information beyond which reproduction of information that is recorded on the RAM data-layer is not permitted.

The end-time information includes date-and-time information for permitting reproduction of information that is recorded on the RAM data-layer. For example, if information indicative of 13:30 on August 10 is recorded as the end-time information, it is impossible to reproduce the information that is recorded on the RAM data-layer beyond 13:30 on August 10.

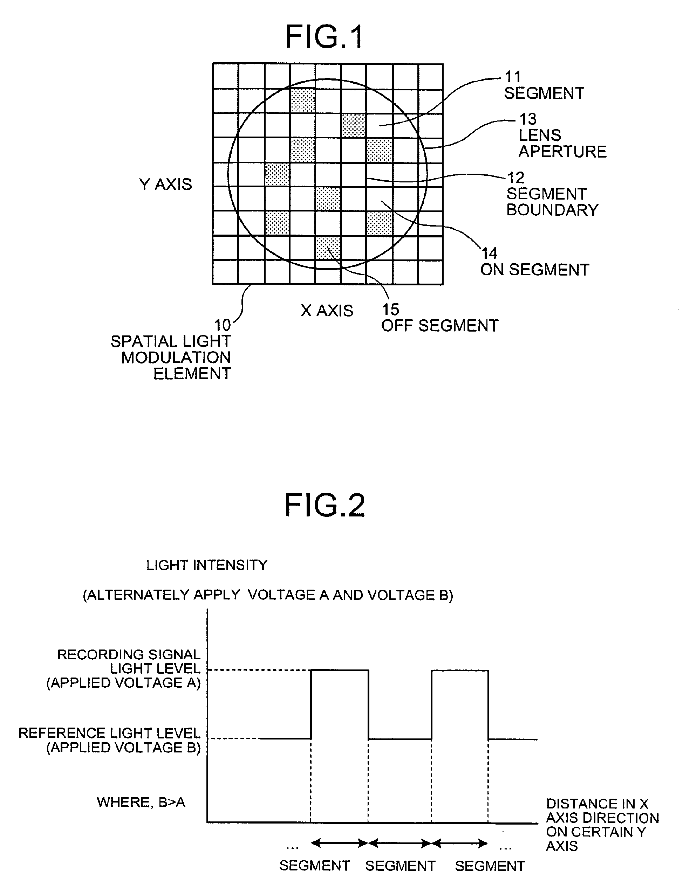

Given below is an explanation of a spatial light information element according to the present embodiment. Fig. 1 is a diagram for explaining a spatial light modulation element 10 provided in the optical information recording and reproducing apparatus that generates recording signal light and reference light. As shown in Fig. 1, the spatial light modulation element 10 has segments 11 and segment boundaries 12. In Fig. 1, a relation between the spatial light modulation element 10 and a lens aperture 13 of a collimator lens that causes a light beam to converge on the spatial light modulation element 10 is shown.

The respective segments 11 are separated by the segment boundaries 12. The spatial light modulation element 10 is formed of a liquid crystal element or an electric optical element, refractive index anisotropy of which electrically changes. Thus, when a voltage is applied to the respective segments 11, the respective segments 11 change to ON segments 14 in which the intensity of transmitted light or reflected light is high or OFF segments 15 in which the intensity of transmitted light or reflected light is low (not 0).

Fig. 2 is a diagram of a modulation state of the light intensity of a light beam transmitted through a plurality of segments 11 of the spatial light modulation element 10 shown in Fig. 1. As shown in the figure, an applied voltage for generating recording signal light is set as A, an applied voltage for generating reference light is set as B (B>A), and the applied voltages A and B are alternately applied to the respective segments 11. According to the present embodiment, recording signal light and reference light are generated in a superimposed state by transmitting a laser beam as a light source through the spatial light modulation element 10. The recording signal light and the reference light are emitted to the optical information recording medium and form an interference pattern in a recording layer of the optical information recording medium thereby recording light information.

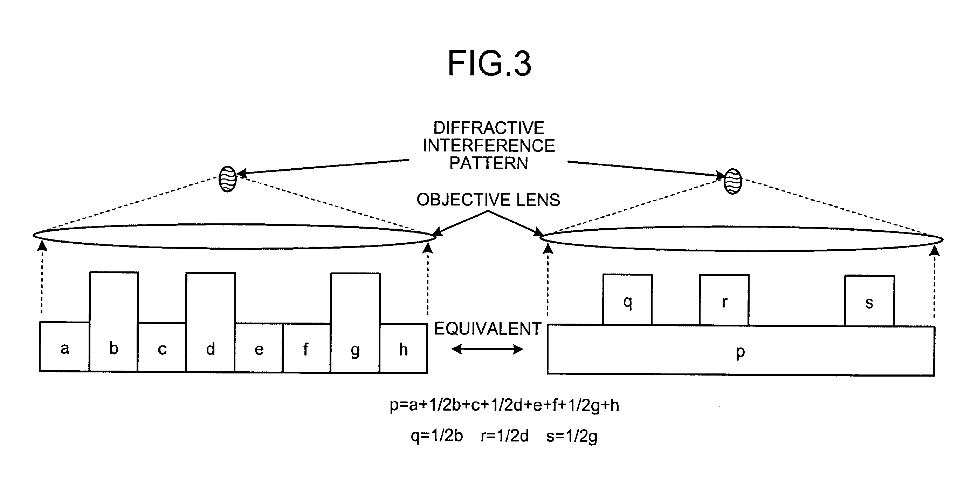

Fig. 3 is a diagram for explaining a principle of optical information recording processing according to the present invention. According to a principle explained below, a light beam generated using the spatial light modulation element 10 is reference light over the entire surface of the light beam and changes to recording signal light that can be subjected to light intensity modulation according to recording information over the entire surface. In the recording layer of the optical information recording medium, the light beam is diffracted and interferes near a focus of an objective lens that converges the light beam and a diffractive interference pattern in which the reference light and the recording signal light are three-dimensionally diffracted and interfere with each other is recorded.

Fig. 3 indicates that an interference pattern generated by a light beam (light intensity components a, b, c, d, e, f, g, and h) transmitted through the respective segments 11 is equivalent to a diffractive interference pattern generated from reference light (a light intensity component p) and recording signal light (light intensity components q, r, and s).

In general, strong far-field diffraction occurs in a three-dimensional area near a focus including a focal plane of an objective lens. According to the Babinet's principle, light intensity components of the respective segments 11 of the spatial light modulation element 10 independently subjected to Fourier transform in integration areas of the respective light intensity components and added up are equivalent to light intensity components of all the segments 11 subjected to Fourier transform in all the integration areas. Based on this equality of the light intensity components and linearity in Fourier transform, a diffractive interference pattern in the example in Fig. 3 can be represented as follows:

A diffractive interference pattern

= F(a) + F(b) + F(c) + F(d) + F(e) + F(f) + F(g) + F(h)

= F(a) + F(2q) +F(c) + F(2r) + F(e) + F(f) + F(2s) + F(h)

= F(a) + 2F(q) + F(c) + 2F(r) + F(e) + F(f) + 2F(s) + F(h)

= F(a) + F (1/2 b) + F(q) + F(c) + F(1/2 d) + F(r) + F(e) + F(f) +F (1/2 g) + F(s) + F(h)

= F(a) + F(1/2 b) + F(c) + F(1/2 d) + F(e) + F(f) + F(1/2 g) + F(h) + F(q) + F(f) + F(s)

Here, F(x) indicates Fourier transform of a light intensity component x. For simplicity of explanation,

$$q = 1/2 \ b,$$

$$r = 1/2 \ d,$$

and

$$s = 1/2 \ g.$$

When p=a+1/2 b+c+1/2 d+e+f+1/2 g+h, according to the Babinet's principle and the linearity of Fourier transform, F(a) + F(1/2 b) + F(c) + F(1/2 d) + F(e) + F(f) + F(1/2 g) + F(h) = F(p). Thus,

a diffractive interference pattern

= F(p) + (F(q) + F(r) + F(s))

= F(p) + F(q + r + s).

Because the same diffraction phenomenon appears even when the reference light and the recording signal light are separated in this way, a strong diffractive interference pattern due to the reference light and the recording signal light appears in a three-dimensional space near the focus including the focal plane.

On the other hand, in a section considerably apart from the focus, because a diffraction effect is small and a light density is also small, the intensity of a diffractive interference pattern is extremely weak. The diffractive interference pattern is recorded only near a convergent point according to a relation between the intensity and the sensitivity of a recording material.

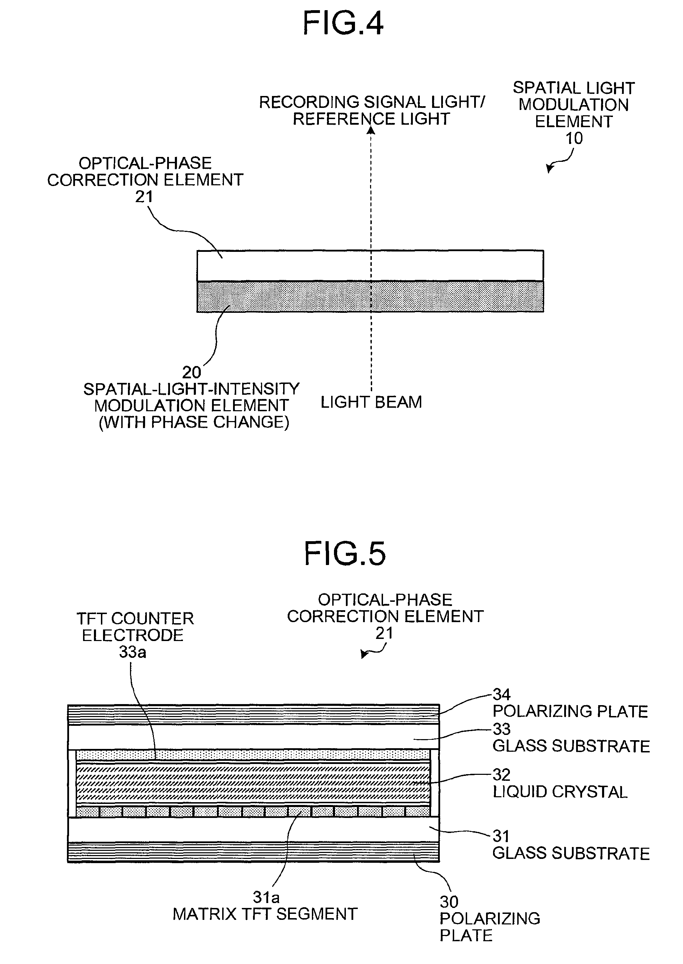

Given below is an explanation of the spatial light modulation element 10 shown in Fig. 1. Fig. 4 is a diagram for explaining the structure of the spatial light modulation element 10 shown in Fig. 1. As shown in Fig. 4, recording signal light and reference light are generated by causing a light beam to pass through a spatial-light-intensity modulation element 20 and an optical-phase correction element 21 stuck together.

The spatial-light-intensity modulation element 20 includes a liquid crystal element of a TN (Twisted Nematic) type. The optical-phase correction element 21 includes a liquid crystal element of a TFT (Thin Film Transistor) type. In this embodiment, the spatial-light-intensity modulation element 20 and the optical-phase correction element 21 include liquid crystal elements. However, an idea same as that in this embodiment can be applied when electric optical elements are used.

Each of the spatial-light-intensity modulation element 20 and the optical-phase correction element 21 are divided into the respective segments 11 by the segment boundaries 12 as shown in Fig. 1. The respective segments 11 of the spatial-light-intensity modulation element 20 and the optical-phase correction element 21 are arranged to share an area through which a light beam is transmitted.

The spatial-light-intensity modulation element 20 is an element that modulates the light intensity of a light beam transmitted therethrough. No problem occurs when the spatial-light-intensity modulation element 20 modulates only the light intensity of the light beam. However, in the case of an optical element such as a liquid crystal element that uses anisotropy of a refractive index of a substance, an optical phase always shifts.

When transmission light intensity of the respective segments 11 is changed according to recording information, the optical phase also changes. Thus, an optical phase of the reference light always changes according to a combination of ON and OFF of the segments. As a result, the reference light does not function as the reference light.

Naturally, when segments that generate recording signal light and segments that generate reference light are completely set independent from each other by arranging the former segments in the center of a spatial-light-intensity modulation element and arranging the latter segments around the former segments, no problem occurs even if an optical phase changes when light intensity is modulated. However, because a segment area that generates the recording signal light is reduced, an information recording density falls.

Therefore, the change in the optical phase caused by the transmission of the light beam through the spatial-light-intensity modulation element 20 is corrected using the optical-phase correction element 21. Specifically, the optical phase changes according a voltage applied to the spatial-light-intensity modulation element 20. Thus, for example, when laser power of a laser irradiated on the spatial-light-intensity modulation element 20 during information recording is changed, the optical-phase correction element 21 corrects the optical phase according to an optical phase characteristic of the spatial-light-intensity modulation element 20.

The correction of the optical phase can be easily performed by checking optical phase characteristics of the spatial-light-intensity modulation element 20 and the optical-phase correction element 21 with respect to an applied voltage in advance before building the elements in the optical information recording and reproducing apparatus, recording information concerning the optical phase characteristics in a memory provided in the optical information recording and reproducing apparatus, and reading out and using the information.

The structure of the optical-phase correction element 21 is explained. Because a general liquid crystal element of the TN type is used as the spatial-light-intensity modulation element 20, detailed explanation of the structure is omitted. Fig. 5 is a diagram for explaining the structure of the optical-phase correction element 21.

As shown in Fig. 5, the optical-phase correction element 21 has a polarizing plate 30, a glass substrate 31, a liquid crystal 32, a glass substrate 33, and a polarizing plate 34. A polarization state of a light beam transmitted through the liquid crystal element of the TN type as the spatial-light-intensity modulation element 20 is linear polarized light. A transmission axis of the light beam through the polarizing plate 30 stuck to the glass substrate 31 coincides with a polarization direction of the linear polarized light.

A matrix TFT segment 31a, which is a TFT-driven segment of a matrix shape, is formed on the glass substrate 31. The polarizing plate 34 is stuck to the glass substrate 33. A direction of a transmission axis of the light beam through the polarizing plate 34 coincides with a direction of the transmission axis of the light beam through the polarizing plate 30.

A TFT counter electrode 33a, which is a counter electrode of the matrix TFT segment 31a formed on the glass substrate 31, is formed on the glass substrate 33. Orientation film treatment performed by rubbing an orientation agent such as polyimide is applied to inner side surfaces of the glass substrate 31 and the glass substrate 33. Liquid crystal molecules are oriented to coincide with the transmission axes of the light beam through the polarizing plate 30 and the polarizing plate 34.

By TFT-driving the liquid crystal molecules by segment units in a matrix shape using the optical-phase correction element 21 having such a structure, the tilt of the liquid crystal molecules can be controlled in a state in which directions of the liquid crystal molecules are aligned in one direction. According to a relation between the refractive index anisotropy and the optical phase, the optical phase of the light beam transmitted through the optical-phase correction element 21 can be freely adjusted. It is possible to correct the shift of the optical phase caused when the spatial-light-intensity modulation element 20 modulates the light intensity of the light beam.

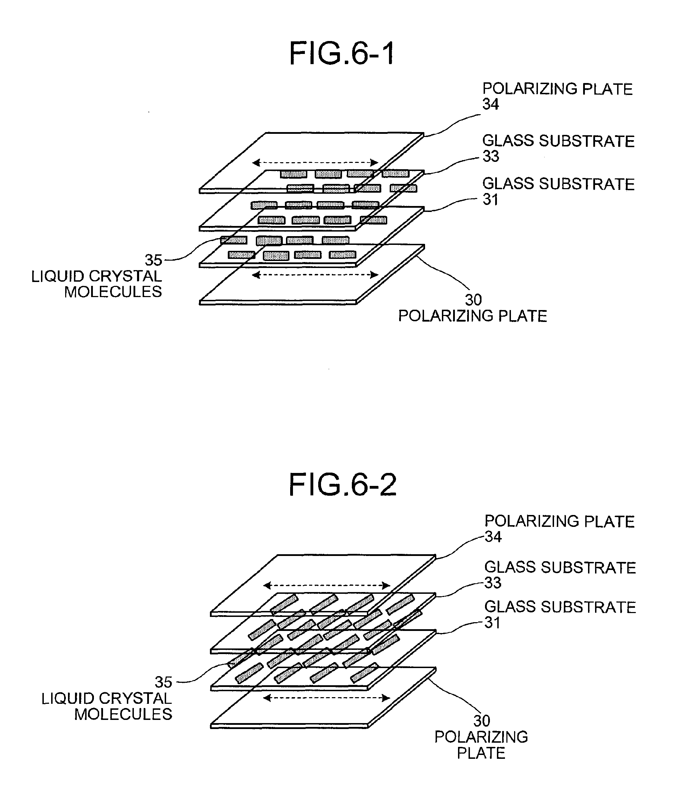

Fig. 6-1 is a diagram of a state of the liquid crystal molecules at the time when the optical-phase correction element 21 is in an OFF state. Fig. 6-2 is a diagram of a state of the liquid crystal molecules at the time when the optical-phase correction element 21 is in an ON state.

As shown in Fig. 6-1, when the optical-phase correction element 21 is in the OFF state, i.e., a voltage is not applied to the segments of the optical-phase correction element 21, liquid crystal molecules are oriented in a direction determined by the rubbing treatment and the orientation film treatment.

As shown in Fig. 6-2, when the optical-phase correction element 21 is in the ON state, i.e., a voltage is applied to the segments of the optical-phase correction element 21, the orientation direction of liquid crystal molecules 35 changes. The refractive index anisotropy thereof changes according to the change in the orientation direction. The shift of the optical phase of the light beam can be corrected by changing the refractive index anisotropy in this way.

The respective segments of the spatial-light-intensity modulation element 20 and the respective segments of the optical-phase correction element 21 are arranged vertically to be associated with each other in a one to one relation. To perform light intensity modulation according to recording information, in synchronization with the respective segments of the spatial-light-intensity modulation element 20 being brought in to the ON or OFF state, the segments of the optical-phase correction element 21 corresponding to the respective segments of the spatial-light-intensity modulation element 20 are brought into the ON or OFF state. The optical phase of the light beam transmitted through the optical-phase correction element 21 is controlled to be fixed over the entire surface of thereof.

As a specific method of correcting an optical phase, for example, there are a method of driving only the segments of the optical-phase correction element 21 corresponding to the segments of the spatial-light-intensity modulation element 20 brought into the ON state and matching an optical phase of recording signal light to an optical phase of reference light and a method of setting an optical phase at a maximum or minimum transmittance level of the spatial-light-intensity modulation element 20 as a reference and matching optical phases of recording signal light and reference signal light to the optical phase.

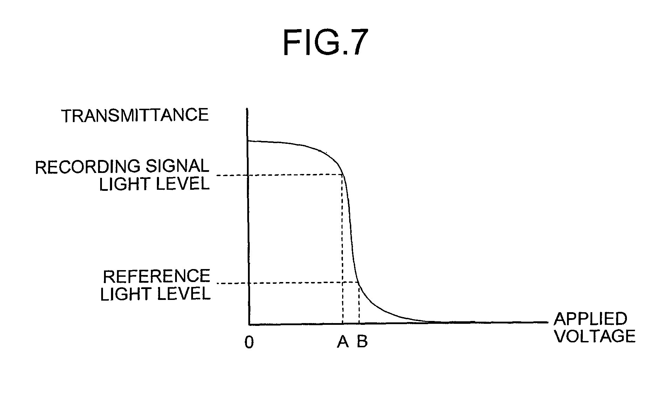

A relation between an applied voltage applied to the spatial-light-intensity modulation element 20 and the transmittance of a light beam is explained. Fig. 7 is a graph of a relation between an applied voltage applied to the spatial-light-intensity modulation element 20 and the transmittance of a light beam.

Because recording signal light has light intensity larger than that of reference light, as shown in Fig. 7, the voltage A smaller than the voltage B applied to the segments that generate reference light is applied to the segments that generate recording signal light such that the transmittance of a light beam through the segments that generate recording signal light is larger than the transmittance of a light beam through the segments that generate reference light.

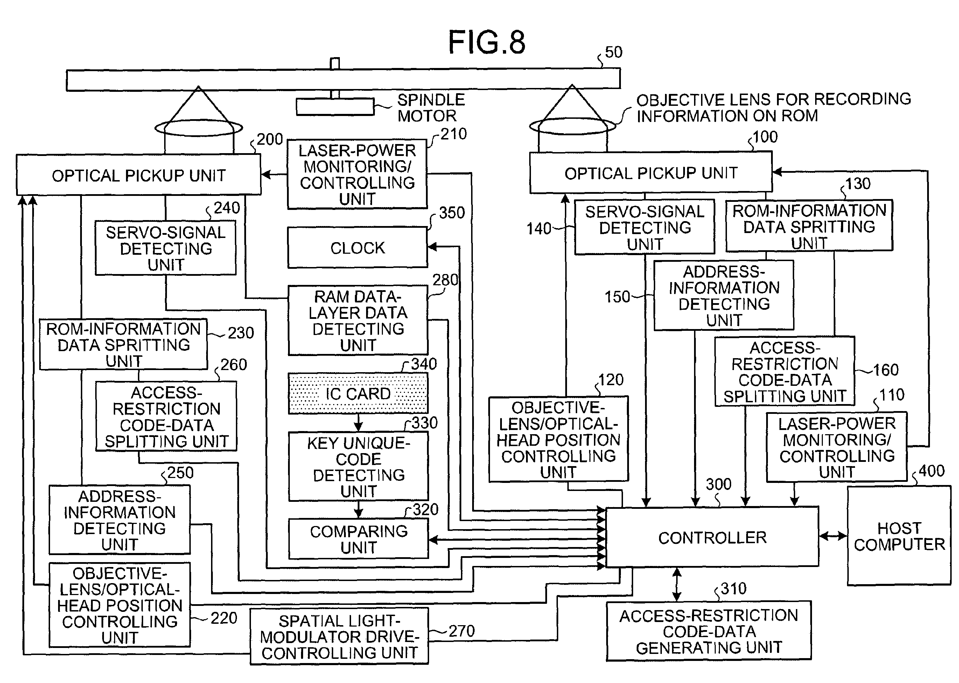

Given below is an explanation of structure of an optical information recording/reproducing apparatus according to the present embodiment. Fig. 8 is a functional block diagram for explaining structure of the optical information recording/reproducing apparatus according to the present embodiment. As shown in the figure, the optical information recording/reproducing apparatus includes optical pickup units 100 and 200, laser-power monitoring/controlling units 110 and 210, objective-lens/optical-head position controlling units 120 and 220, ROM-information data splitting units 130 and 230, servo-signal detecting units 140 and 240, address-information detecting units 150 and 250, access-restriction code-data detecting units 160 and 260, a spatial light modulation element 270, a RAM data-layer data detecting unit 280, a controller 300, an access-restriction code-data generating unit 310, a comparing unit 320, a key unique-code detecting unit 330, and a clock 350.

A user identifier 1, which is one of the access-restriction codes, is recorded on a ROM data-layer of an optical information recording medium 50 in a form of optical-phase pits, and the optical information recording medium 50 is inserted into the optical information recording/reproducing apparatus. To access the ROM data-layer of the optical information recording/reproducing apparatus by operation of an administrator using the optical information recording/reproducing apparatus, the administrator connects an IC card 340 to the key unique-card detecting unit 330. The key unique-code detecting unit 330 sends a key unique-code of the IC card 340 to the comparing unit 320. The access-restriction code is information for restricting access to data recorded on the ROM data-layer or the RAM data-layer.

The comparing unit 320 compares the key unique-code of the IC card 340 with the user identifier 1 recorded on the ROM data-layer. When the comparing unit 320 determines that the key unique-code is valid (determines that the administrator has authority for access to the ROM data-layer), the administrator can access to the ROM data-layer.

According to the present embodiment, the user identifier 1 that is formed with optical-phase pits is recorded on a lead-in area that is a ROM data-layer of the optical information recording medium 50. When the optical information recording medium 50 is inserted into the optical information recording/reproducing apparatus, the optical information recording/reproducing apparatus reads the user identifier 1 and compares the key unique-code of the IC card 340 with the user identifier. It is allowable to compare each user identifier 1 corresponding to each address with the key unique-code of the IC card 340 based on its address.

The comparing unit 320 compares the user identifier with the key unique-code. The user identifier 1 that is recorded on the ROM data-layer as optical-phase pits contains an identifier that has authority for permitting recording of the access-restriction code on a rewritable area.

When it is found from comparison result by the comparing unit 320 that there is such a code in the key unique-code of the IC card 340 that equivalent to the authority for permitting recording of the access-restriction code, the administrator can perform control/signal processing with the optical pickup unit 100 by inputting a predetermined record command into a host computer 400.

When it is determined from comparison result by the comparing unit 320 that the authority for permitting recording of the access-restriction code is not attached to the key unique-code, the controller 300 sends a signal for notifying presence of a RAM area that is the RAM data-layer formed with recording layers of the optical information recording medium 50 to the host computer 400. A recording command of recording data on the ROM data-layer is not valid. A case of having the authority for permitting recording of the access-restriction is explained below.

The controller 300 acquires a new access-restriction code and new digital data from the host computer 400, and recording or reproducing data on or from the optical information recording medium 50. The controller 300 sends data concerning the access-restriction code out of data acquired from the host computer 400 to the access-restriction code-data generating unit 310. The access-restriction code-data generating unit 310 converts data concerning the access-restriction code into a predetermined record format.

In a case the controller 300 accesses to the ROM data-layer of the optical information recording medium 50, the controller 300 sends a command to the objective-lens/optical-head position controlling unit 120. The objective-lens/optical-head position controlling unit 120 operates the optical pickup unit 100 and the objective lens thereof following the command so that the controller 300 accesses to a target address on the ROM data-layer.

In the process, the servo-signal detecting unit 140 controls a focus position and a track position, and the optical pickup unit 100 sends the address information and information on the access-restriction code to the ROM-information data dividing unit 130.

The ROM-information data dividing unit 130 splits data into the address information and the information on the access-restriction data, and sends the address information to the address-information detecting unit 150 and the information on the access-restriction data to the access-restriction code-data detecting unit 160. The access-restriction code-data detecting unit 160 detects the access-restriction code from the information on the access-restriction code, and sends the detected access-restriction code to the controller 300.

The address-information detecting unit 150 detects an address on which the laser beam has reached based on the address information, and sends the detected address to the controller 300. The controller 300 determines whether the address detected by the address-information detecting unit 150 is correct, that is, whether the light beam that emits from the optical pickup unit 100 converges on a proper position on the optical information recording medium 50. When the address is not correct, the controller 300 sends a command to the objective-lens/optical-head position controlling unit 120 to correct a position of the objective lens.

The laser-power monitoring/controlling unit 110 monitors a laser power of a long-wavelength laser emitting from the optical pickup unit 100, and supplies to the optical pickup unit 100 a predetermined laser power depending on the timing of accessing, reproducing, and recording.

When the access-restriction code that is recorded on the ROM data-layer is referred, the access-restriction code-data detecting unit 160 generates various restriction-codes and the generated various restriction-codes are displayed on a display of the host computer 400 via the controller 300.

Subsequently, a recording process of recording data on a rewritable area of the ROM data-layer of the optical information recording medium 50 is explained. In a case the optical information recording/reproducing apparatus records data including the access-restriction code on a rewritable area of the ROM data-layer, the controller 300 acquires a new access-restriction code that has been converted into a predetermined record format from the access-restriction code-data generating unit 310.

The controller 300 sends the access-restriction code to the laser-power monitoring/controlling unit 110. The controller 300 simultaneously sends a command to the objective-lens/optical-head position controlling unit 120 so that the light beam converges on a target position on the optical information recording medium. The laser-power monitoring/controlling unit 110 generates a recording pulse following to the record format of the access-restriction code so that the access-restriction code is sequentially recorded on a specified position of the rewritable area.

The controller 300 acquires reproduction data that is detected by the access-restriction code-data detecting unit 160 to determine whether data recorded on the rewritable area is correct, and determines it by using an error detecting/correcting function that is one of functions of the controller 300. Specifically, the controller 300 performs a verifying process for determining whether quality of the reproduction data detected by the access-restriction code-data detecting unit 160 is acceptable. When the quality is not acceptable, the access-restriction code is recorded again on the same address rewritable area or on another address rewritable area.

In the above explanation according to the present embodiment, a new access-restriction code is recorded on a rewritable area of the ROM data-layer. If an encoder and a decoder are provided, it is possible to have a required function for dealing with music or movie digital data.

Subsequently, functions of the optical pickup unit 200 shown in Fig. 8 and its operation and signal processing are explained. Assuming that the comparison of the key unique-code of the IC card 340 with the user identifier 1 recorded on the ROM data-layer has finished in the following explanation of the optical pickup unit 200 below.

In a case the optical information recording/reproducing apparatus accesses to a recording layer that is the RAM data-layer of the optical information recording medium 50 to record data, the controller 300 acquires recorded data (data such as movie, image, or music data), and manages recording of data on the optical information recording medium 50. If there is data to be conversed among acquired various data, data conversion is performed by a cording unit of a not-shown dedicated hardware or software application.

To access to the ROM data-layer that stores therein recording-control information of the target recording layer to be recorded or reproduced, the controller 300 sends a command to the objective-lens/optical-head position controlling unit 220 to operate the optical pickup unit 200 and its objective lens so that the controller 300 accesses to an address on the ROM data-layer. In the process, the objective-lens/optical-head position controlling unit 220 controls a focus position and a track position.

The ROM-information data splitting unit 230 acquires address information and information on the access-restriction code from the optical pickup unit 200, and splits the data into the address information and the information on the access-restriction data. The ROM-information data splitting unit 230 sends the address information to the address-information detecting unit 250 and the information on the access-restriction data to the access-restriction code-data detecting unit 260.

The address-information detecting unit 150 detects an address on which the laser beam has reached based on the address information, and sends the detected address to the controller 300. The controller 300 determines whether the address detected by the address-information detecting unit 250 is correct, that is, whether the light beam that emits from the optical pickup unit 100 converges on a proper position. When the address is not correct, the controller 300 sends a command to the objective-lens/optical-head position controlling unit 220 to correct a position of the objective lens.

The laser-power monitoring/controlling unit 210 monitors a laser power of the laser emitting from the optical pickup unit 200, and supplies to the optical pickup unit 200 a predetermined laser power depending on the timing of accessing, reproducing, and recording.

Subsequently, a recording process performed by the optical information recording/reproducing apparatus of recording data on the RAM data-layer is explained. The controller 300 acquires from the host computer 400 data to be recorded on the RAM data-layer. The controller 300 has a cording function of converting data acquired from the host computer 400 into page data to be recorded on the RAM data-layer.

The controller starts coding data on each page following a command from the host computer 400. Coded page data is sent to the spatial light-modulator drive-controlling unit 270.

The objective-lens/optical-head position controlling unit 220 controls the optical pickup unit 200 and its objective lens following the address that is detected by the address-information detecting unit 250 thereby it is shifted from a recording waiting state to a recording starting state.

The laser-power monitoring/controlling unit 210 increases the laser power at the optical pickup unit 200 to the recording level as a pulse output. The spatial light-modulator drive-controlling unit 270 changes, at the timing of the laser power increase, the light transmittance of each segment of the spatial light modulation element, and generates a reference light and a recording signal light with which information corresponding to the page data can be recorded on the recording layer.

When the laser-power monitoring/controlling unit 210 increases the laser power, the S-polarized server control beam also increases simultaneously. The optical pickup unit 200 according to the present embodiment adjusts the light intensity of a center portion of the spatial-light-intensity modulation element 20 corresponding to the S-polarized light portion in an integrated manner. It means that the spatial light-modulator drive-controlling unit 270 controls the center portion of the spatial-light-intensity modulation element 20 in such a manner that its light transmittance decreases at the timing of increase of the laser power thereby adjusting the laser power to the minimum value at which the servo control requires.

In the page-data recording or the reproduction waiting state, the spatial light-modulator drive-controlling unit 270 sets the light transmittance of the spatial-light-intensity modulation element 20 to the minimum value (substantially 0) to suppress unwanted influence on the recording layer of the optical information recording medium.

According to the present embodiment, in recording data on the RAM data-layer, recording actions of users are restricted by various codes. The comparison of the key unique-code with the access-restriction code recorded on the ROM data-layer is assumed to have been performed. If the clock 350 is used in addition, reliability of information on the RAM data-layer can be improved.

Specifically, it is possible to determine whether a recording action is allowable by comparing the key unique-code recorded on the IC card 340 and information acquired from the clock 350, for example, a recording date-and-time with an access-restriction code (the access-restriction code including a date-and-time code for permitting recording). It is preferable to use a wave clock, which is hardly subject to falsification from outside, as the clock 350.

Subsequently, a reproducing process performed by the optical information recording/reproducing apparatus of reproducing data from the RAM data-layer is explained. Assuming that the comparison of the key unique-code of the IC card 340 with the user identifier 1 formed with optical-phase pits on the lead-in area as the ROM data layer has finished in the following explanation. In a case of reproducing only, the comparison by using the clock 350 is not performed.

Upon receiving a command of specifying a file to be accessed from the host computer 400, the controller 300 starts accessing to the optical information recording medium 50. When the controller 300 starts an access operation, the controller 300 sends a command to the objective-lens/optical-head position controlling unit 220 to operate the optical pickup unit 200 and its objective lens. The controller 300 then accesses to an address on the ROM data-layer corresponding to a RAM area on which the target information to be reproduced is recorded.

In the process, the servo-signal detecting unit 240 controls a focus position and a track position, and the optical pickup unit 200 sends the address information and information on the access-restriction code to the ROM-information data dividing unit 230.

The ROM-information data dividing unit 230 splits data into the address information and the information on the access-restriction data, and sends the address information to the address-information detecting unit 250 and the information on the access-restriction data to the access-restriction code-data detecting unit 260.

The address-information detecting unit 250 detects an address on which the laser beam has reached based on the address information, and sends the detected address to the controller 300. The controller 300 determines whether the address detected by the address-information detecting unit 150 is correct, that is, whether the light beam that emits from the optical pickup unit 100 converges on a proper position on the optical information recording medium 50. When the address is not correct, the controller 300 sends a command to the objective-lens/optical-head position controlling unit 220 to correct a position of the objective lens.

The access-restriction code-data detecting unit 260 detects an access-restriction code recorded on the ROM data-layer. The detected access-restriction code contains the user identifier 1 and a user identifier 2. In reproducing information recorded on the RAM data-layer, the user identifier 1 is compared by the comparing unit 320 with the key unique-code of the IC card 340 (the key unique-code corresponding to the user identifier 1).

When the user identifier 1 agrees with the corresponding key unique-code, the controller 300 permits the host computer 400 to only retrieve information (file) that is recorded on the RAM data-layer.

Whether the host computer is permitted to access to a file recorded on the RAM data-layer is determined based on the user identifier 2. It means that the comparing unit 320 compares the user identifier 2 with a key unique-code of the IC card 340 (key unique-code corresponding to the user identifier 2). When both codes agree to each other, access from the host computer 400 to the file is permitted. The user identifier 2 is recorded on a rewritable area in the ROM data-layer, and is recorded, in correspondence with the information recorded on the RAM data-layer, on a position on the Rom data-layer that is located in a depth direction of the RAM information layer.

After the comparison of the user identifier 2 performed by the comparing unit 320, the comparing unit 320 sends an access-permission signal to the controller 300. The controller 300 instructs the objective-lens/optical-head position controlling unit 220 to trace a group of page data that forms a target file to be read.

The controller 300 sends a command to the spatial light-modulator drive-controlling unit 270 to output an reference light adjusted at the reproduction level. The laser-power monitoring/controlling unit 210 monitors the laser power of the reference light emitting from the optical pickup unit 200, and sequentially detects information recorded on the RAM data-layer by a unit of page data.

The controller 300 causes the RAM data-layer data detecting unit 280 to sequentially send the page data forming the target file to the controller 300. After decoding the page data, the controller 300 sends the decoded data to the host computer 400, and the host computer 400 displays the file on a display thereof.

In recording data on the RAM data-layer, the comparing unit 320 compares the access-restriction codes recorded on the ROM data-layer (for example, the user identifier and the user identifier 2) with the key unique-code of the IC card 340. When both codes agree to each other, recording of information on the RAM data-layer is permitted. It means that in recording of information on the RAM data-layer, after the comparison of the access-restriction code recorded on the ROM area layer corresponding to an area on which the information is recorded, actual recording starts from a header address as a recording start position.

The optical information recording/reproducing apparatus according to the present embodiment modulates, in recording of information on the RAM data-layer, it is not that the recording signal light emitting from each light source is modulated but that the recording signal light of each segment is adjusted by using the spatial light modulation element. Moreover, a portion corresponding to the servo control beam, which is components of the S-polarized light, is not divided into segments but integrally forms a single circle. Therefore, it is possible to detect data recorded on the ROM data-layer at any time in a similar manner detecting data from a normal DVD or CD. In addition, access-restriction codes such as the user identifiers 1 and 2 and a date can be compared and updated during recording of data on the RAM data-layer.

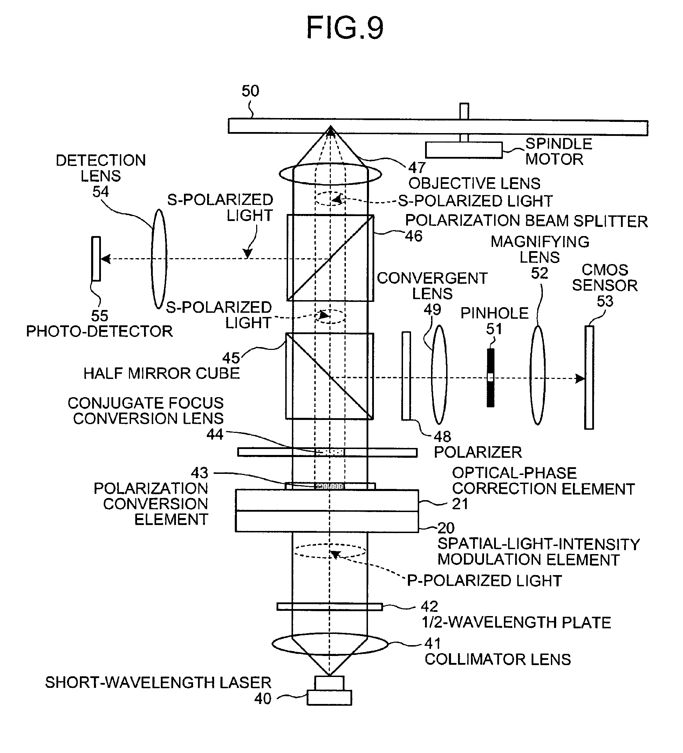

Given below is an explanation of structure of the optical pickup unit 200. Fig. 9 is an exemplary functional block diagram for explaining structure of the optical pickup unit 100. As shown in the figure, the optical pickup unit 100 includes a short-wavelength laser 40, a collimator lens 41, a 1/2-wavelength plate 42, the spatial-light-intensity modulation element 20, the optical-phase correction element 21, a polarization conversion element 43, a conjugate focus conversion lens 44, a half mirror cube 45, a polarization beam splitter 46, an objective lens 47, a polarizer 48, a convergent lens 49, a pinhole 51, a magnifying lens 52, a CMOS sensor 53, a detection lens 54, and a photo-detector 55.

The short-wavelength laser 40 emits a light beam, the light intensity of which is adjusted able to record or reproduce information. Adjustment of the light intensity is performed by the laser-power monitoring/controlling unit 210 under control of the controller 300.

In this optical system, when a light beam is emitted from the short-wavelength laser 40, the light beam is transmitted through the collimator lens 41 and converted into a light beam of P-polarized light by the half-wave plate 152. The light beam of the P-polarized light is made incident on the spatial-light-intensity modulation element 20 and the optical-phase correction element 21 and converted into recording signal light and reference light of the P-polarized light by the spatial-light-intensity modulation element 20 and the optical-phase correction element 21.

The polarization conversion element 43 is, for example, a 1/2-wavelength plate or a rotary plate and changes the direction of the polarization of the light beam to an orthogonal direction before or after the light beam passes through the polarization conversion element 43.

A polarization state of a light beam passed through a section around the polarization conversion element 43 remains in the P-polarized light and a polarization state of a light beam transmitted through the section of the polarization conversion element 43 is converted into the S-polarized light. The light beam of the S-polarized light is used as a light beam for servo control. Because a polarization direction of the light beam is orthogonal to the light beam of the P-polarized light that forms a transmission interference pattern, there is no mutual action.

The light beam of the P-polarized light is transmitted through the half mirror cube 45, the polarization beam splitter 46, and the objective lens 47 and made incident on the optical information recording medium 50 and forms an interference pattern to thereby record information on the optical information recording medium 50. Although in the polarization beam splitter 46, a P-polarized light transmittance is set to 100%, an S-polarized light transmittance to 50%, and a P-polarized reflectance factor to 50%, those values are not limited to the above values.

When the information recorded on the optical information recording medium 50 is reproduced, the light beam of the P-polarized light as reference light is irradiated on the optical information recording medium 50. The light beam reflected by the optical information recording medium 50 is made incident on the CMOS sensor 53 through the objective lens 47, the polarization beam splitter 46, the half mirror cube 45, the polarizer 48, the convergent lens 49, the pinhole 51, and the magnifying lens 52. Thereafter, the light beam made incident on the CMOS sensor 53 is converted into an electric signal and subjected to amplification processing and decode processing, whereby the information stored on the optical information recording medium 50 is reproduced.

On the other hand, the light beam of the S-polarized light is converted into convergent light or divergent light by being transmitted through the conjugate focus conversion lens 44. The conjugate focus conversion lens 44 is explained in detail later.

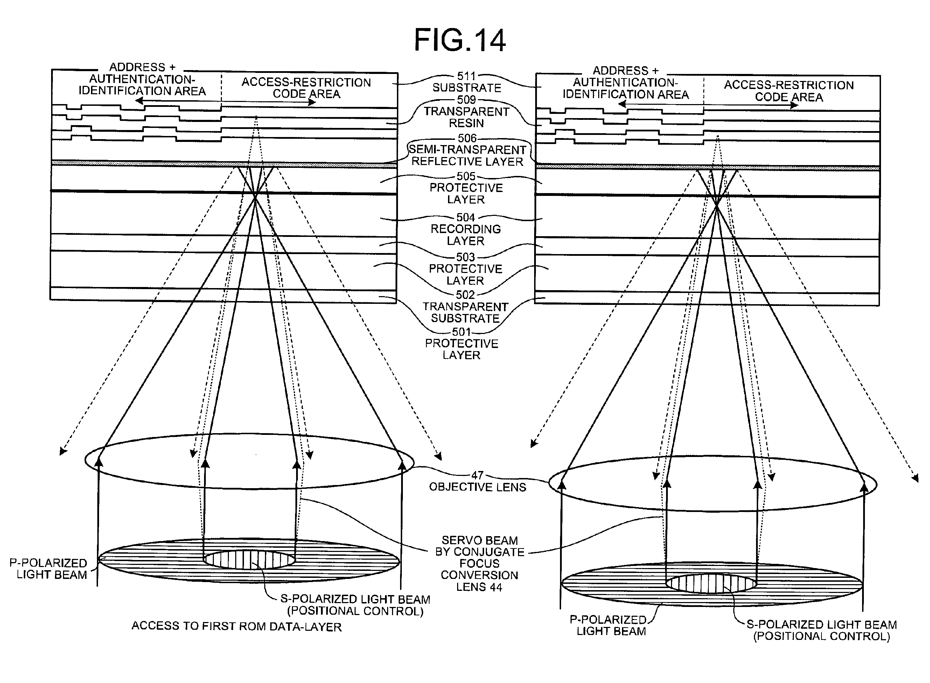

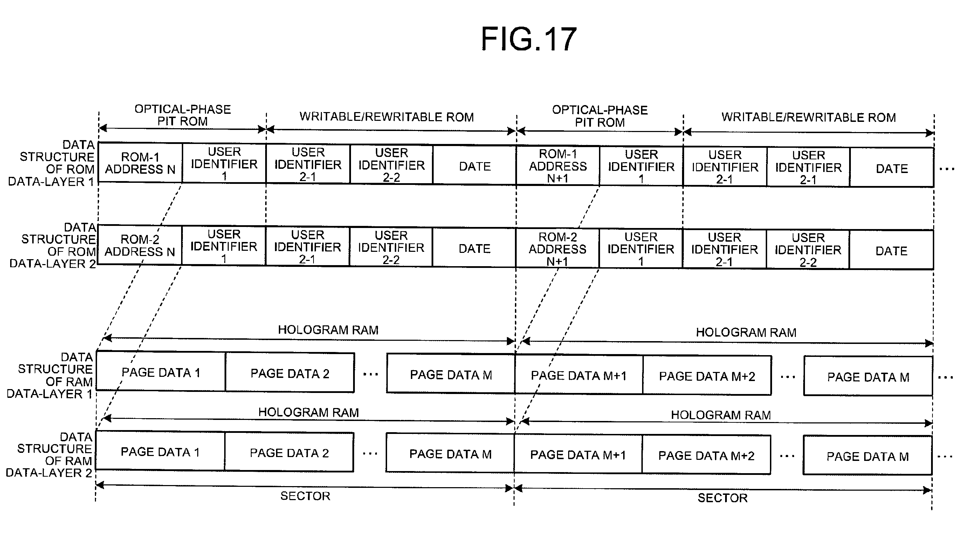

The light beam of the S-polarized light is transmitted through the half mirror cube 45 and the polarization beam splitter 46 and converges, according to the function of the objective lens 47, in a position on the optical information recording medium 50 different from the focus position of the light beam of the P-polarized light shown in Fig. 14 or 17.

After that, the S-polarized light beam is reflected by a reflective layer of the optical information recording medium 50 and passes through the objective lens 47, the polarization beam splitter 46, and the detection lens 54. The S-polarized light beam is converted into an electric signal by the photo-detector 55 that detects information on servo information including address information, a track error, and a focus error-signal and access-restriction codes concerning a rewritable area. Detailed description about the access-restriction code is explained later.

The signal obtained by the photo-detector 55 is transmitted to a controller that performs servo control of the objective lens 47. The control of a position of the objective lens 47 is performed based on information of the signal. The light beam can be caused to converge in a predetermined area of the optical information recording medium 50 by such control.

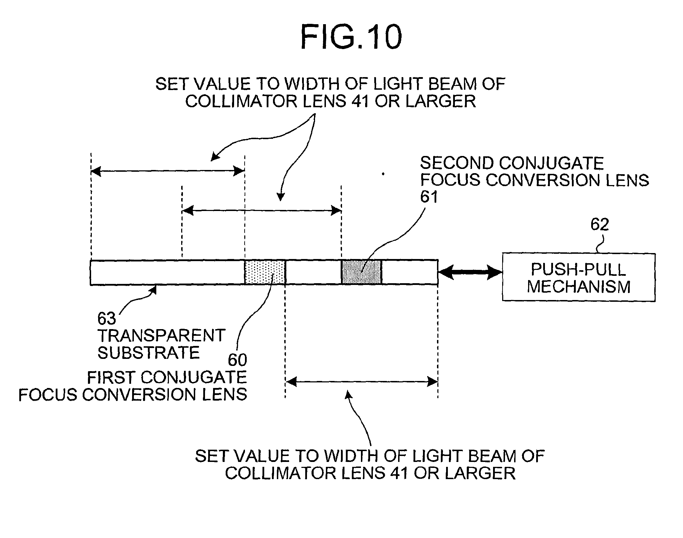

Given below is an explanation of structure of the conjugate focus conversion lens 44 shown in Fig. 9. Fig. 10 is a diagram of the structure of the conjugate focus conversion lens 44 shown in Fig. 9. As shown in the figure, the conjugate focus conversion lens 44 includes a plurality of conjugate focus conversion lenses, i.e., in the case of Fig. 10, a first conjugate focus conversion lens 60 and a second conjugate focus conversion lens 61.

In the case of Fig. 10, the first conjugate focus conversion lens 60 and the second conjugate focus conversion lens 61 are embedded in a transparent substrate 63 by integral molding to create the conjugate focus conversion lens 44.

by using the conjugate focus conversion lens 44, it is possible to change a position of a conjugate focus at three stages including a section of the transparent substrate 63 where the first conjugate focus conversion lens 60 and the second conjugate focus conversion lens 61 are not provided.

Specifically, by moving the conjugate focus conversion lens 44 to the left and right with a push-pull mechanism 62 employing an electromagnetic plunger, the section of the transparent substrate 63, the first conjugate focus conversion lens 60, or the second conjugate focus conversion lens 61 is arranged on an optical path on which the light beam of the S-polarized light passes.

The widths of the section of the transparent substrate 63 where the first conjugate focus conversion lens 60 and the second conjugate focus conversion lens 61 are not provided, the first conjugate focus conversion lens 60, a section of the transparent substrate 63 around the first conjugate focus conversion lens 60, and the second conjugate focus conversion lens 61 and a section of the transparent substrate 63 around the second conjugate focus conversion lens 61 are set to be equal to or larger than an light beam width of the collimator lens 41 shown in Fig. 9.

The objective lens 47 moves by using the servo mechanism in association with movement of the conjugate focus conversion lens 44 so that the S-polarized light beam converges on a position on the optical information recording medium 50 on which the address information and the access-restriction code is recorded, and the P-polarized light beam forms three patterns of transmission interference patterns in a depth direction of the recording layer of the optical information recording medium 50.

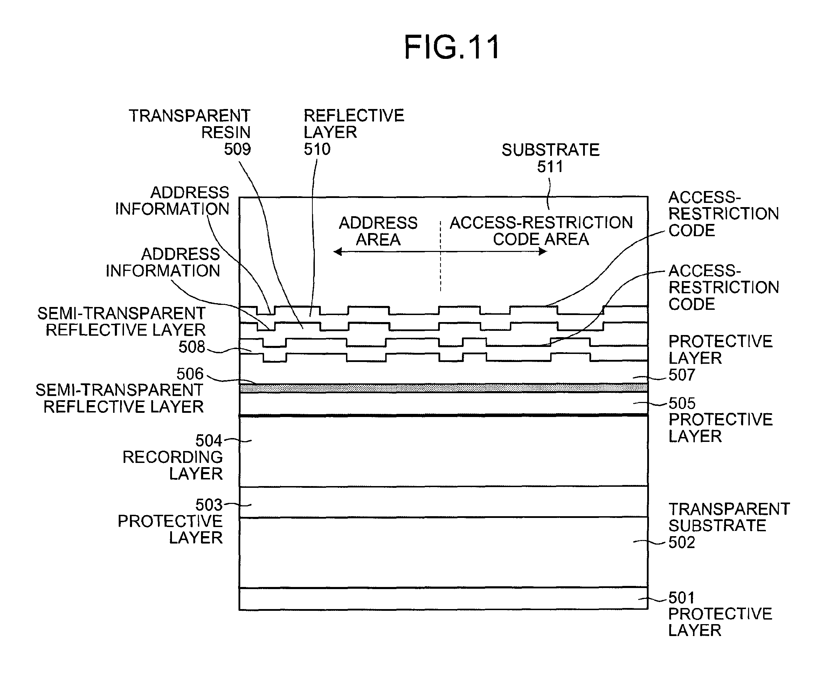

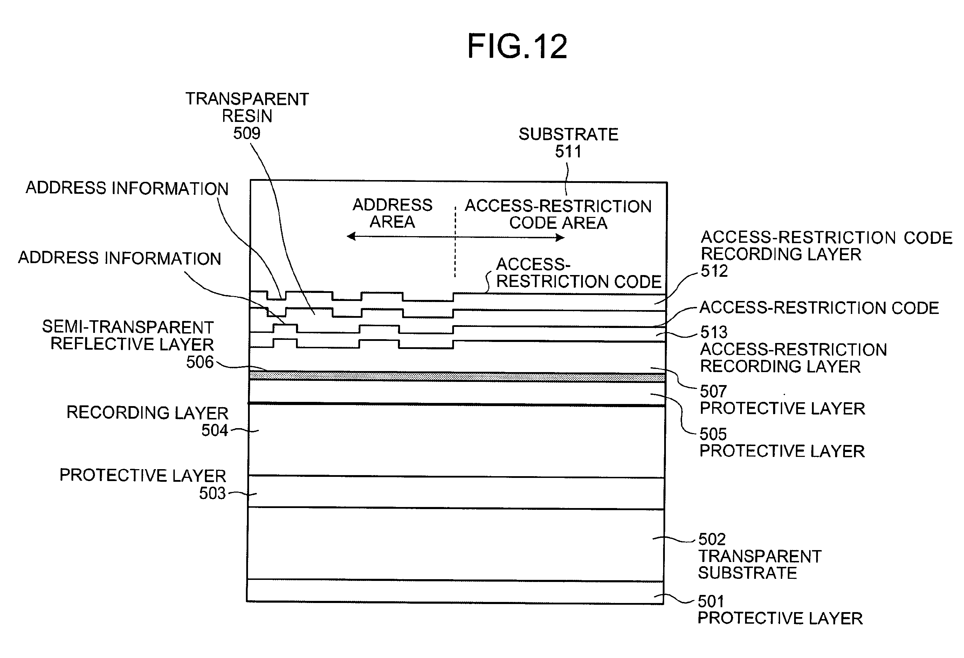

Structure of the optical information recording medium according to the present embodiment is explained. Fig. 11 is a diagram for explaining structure of the optical information recording medium according to the present embodiment (on which address information and access-restriction code are recorded in its initial state as non-rewritable optical-phase pits). Fig. 12 is a diagram for explaining structure of the optical information recording medium according to the present embodiment (of which the access-restriction code is recorded on a rewritable area).

As shown in Fig. 11, the optical information recording medium includes a protective layer 501, a transparent substrate 502, a protective layer 503, a recording layer 504, a protecting image 505, a semi-transparent reflective layer 506, a protective layer 507, a semi-transparent reflective layer 508, a transparent reflective resin 509, a reflective layer 510, and a substrate 511.

The recording layer 504 is made of a photo polymer that can be used as a hologram recording material. In the recording layer 504, the transmission interference patterns are formed on a three-dimensional area including a conjugate-point position on which the emitted recording signal light and the emitted reference light converge.

The address information and the access-restriction code are recorded as optical-phase pits on the substrate 511 in its initial state. The address information and the access-restriction code are also recorded as optical-phase pits on the transparent resin 509 by using photo-polymerization in its initial state.

The optical information recording medium shown in Fig. 12 includes the protective layer 501, the transparent substrate 502, the protective layer 503, the recording layer 504, the protective layer 505, the semi-transparent reflective layer 506, the protective layer 507, the transparent reflective resin 509, the reflective layer 510, the substrate 511, and access-restriction code recording layers 512 and 513.

The access-restriction code recording layers 512 and 513 is made of, for example, a change recording material a pigment-based write-once material. The access-restriction code is formed on the access-restriction code recording layers 510 and 511.

The access-restriction code recording layers 512 and 513 has a function as the semi-transparent reflective layer so the semi-transparent reflective layer 506 has. It is allowable that there provided a light transmittance/reflectance-factor adjusting film made of a metal or a dielectric material between the access-restriction code recording layers 510 and another light transmittance/reflectance-factor adjusting film made of a metal or a dielectric material between the access-restriction code recording layers 512 and the substrate 511.

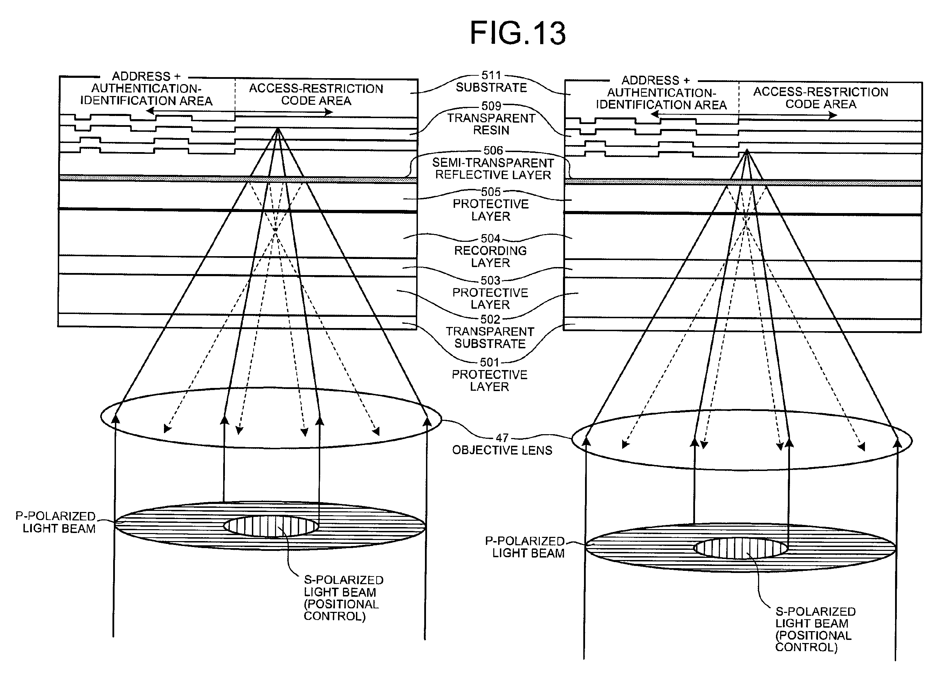

Given below is an explanation of a relation between the light beam (the P-polarized light beam and the S-polarized light beam) and units that form the optical information recording medium during recording or reproducing by using the optical pickup unit explained with reference to Fig. 9. Fig. 13 is an explanatory diagram (1) for explaining a relation between the light beam and units that form the optical information recording medium.

Given below is an explanation with reference to Fig. 13 of a relation between the light beam and units that form the optical information recording medium in a case that the transparent substrate 60 of the conjugate focus conversion lens 44 explained with reference to Fig. 10 is flat. The center portion of the light beam entering into the objective lens 47 is formed with components of the S-polarized light, which is to be the servo control beam. The ring portion surrounding the center portion is formed with components of the P-polarized light, which is to form the transmittance interference patterns.

The difference between the right-sided figure and the left-sided figure is whether the servo control beam accesses to either a ROM data-layer (layer containing information on addresses, authentication identifiers, and access-restriction codes) far away from the objective lens 47 or a ROM data-layer close to the objective lens 47.

As shown in examples in Fig. 13, because the transparent substrate 60 of the conjugate focus conversion lens 44 through which the light beam passes is flat, the light beam having the P-polarized components and the S-polarized components is under the influence of the objective lens 47 only. In this case, the P-polarized light beam that is to be the reference method and the recording signal light for forming the transmittance interference patterns is reflected by the semi-transparent reflective layer 506 at, for example, 70%. The reflected light beam is diffracted in the recording layer 504 where the diffracted reference light and the diffracted recording signal light are interfered with each other thereby forming a transmittance interference pattern in a three-dimensional area at a high optical-density, thus information is recorded.

The P-polarized light beam passed through the semi-transparent reflective layer 506 is reflected and diffracted by the optical-phase pits or the guide track under the influence of reflection function of the ROM data-layer. The reflectance factor of each layer of the ROM data-layer is 40% and lights entering from the both sides are reflected or pass through only once, 3.6% from a ROM data-layer that is laid on a side of the objective lens 47, and 3.24% from a ROM data-layer that is laid on a side far away from the objective lens 47. As a result, the optical density of the reflected components of P-polarized light beam in the recording layer 504 is extremely low, which suppresses an influence of the light beam reflected by each layer of the ROM data-layer over the recording layer 504 to an extremely low level.

In reproducing information recorded on the optical information recording medium by emitting the reference light to the transmittance interference patterns by using the same convergent lens 49 for convergence of the light reflected by the optical information recording medium, the pinhole 51 is required because the reflected lights have different convergence points. By using the pinhole 51, it is possible to shield high-order diffracted lights thereby removing noises during reproduction.

The light beam of S-polarized components converges on the ROM data-layer that stores address information formed with optical-phase pits, optical-phase pits, or an access-restriction code on a rewritable area, and is reflected by the ROM data-layer. About 50% of the reflected S-polarized light is reflected by the polarization beam splitter 46, and reaches the detection lens 54 and the photo-detector 50. The reached light beam is converted into address information and the access-restriction code.

Fig. 14 is an explanatory diagram (2) for explaining a relation between the light beam and the units that form the optical information recording medium. Given below is an explanation with reference to Fig. 14 of a relation between the light beam and units that form the optical information recording medium in a case that the light beam penetrates a concave-lens portion of the conjugate focus conversion lens 44 explained with reference to Fig. 10.

The center portion of the light beam entering into the objective lens 47 is formed with components of the S-polarized light, which is to be the servo control beam. The ring portion surrounding the center portion is formed with components of the P-polarized light, which is to form the transmittance interference patterns.

The difference between the right-sided figure and the left-sided figure is whether the servo control beam accesses to either the ROM data-layer far away from the objective lens 47 or the ROM data-layer close to the objective lens 47.

As shown in examples in Fig. 14, because the light beam passes through the concave-lens portion of the conjugate focus conversion lens 44, a focal point of the S-polarized light beam is located different from a focal point of the objective lens 47, that is, the S-polarized light beam converges on a point farther than the focal point of the objective lens 47.

In this case, the P-polarized light beam that is to form the reference light and the recording signal light for use in recording a transmittance interference pattern is reflected and diffracted, before reaching the semi-transparent reflective layer 506, in the recording layer 504 thereby the transmittance interference pattern is recorded.

After recording, 70%, for example, of the light beam is reflected by the semi-transparent reflective layer 506. A light beam passed through the semi-transparent reflective layer 506 is reflected and diffracted by the optical-phase pits or the guide track under the reflection function of the ROM data-layer. As is explained above with reference to Fig. 13, the reflectance factor of each layer of the ROM data-layer is 40% and lights entering from the both sides are reflected or pass through only once, 3.6% from a ROM data-layer laid on a side of the objective lens 47, and 3.24% from a ROM data-layer laid on a side far away from the objective lens 47. As a result, the optical density of the reflected components of P-polarized light beam in the recording layer 504 is extremely low, which suppresses an influence of the light beam reflected by each layer of the ROM data-layer over the recording layer 504 to an extremely low level.

In reproducing information recorded on the optical information recording medium by emitting the reference light to the transmittance interference patterns by using the same convergent lens 49 for convergence of the light reflected by the optical information recording medium, the pinhole 51 is required because the reflected lights have different convergence points. By using the pinhole 51, it is possible to shield high-order diffracted lights thereby removing noises during reproduction.

The light beam of S-polarized components converges on the ROM data-layer that stores address information formed with optical-phase pits, optical-phase pits, or an access-restriction code on a rewritable area, and is reflected by the ROM data-layer. About 50% of the reflected S-polarized light is reflected by the polarization beam splitter 46, and reaches the detection lens 54 and the photo-detector 50. The reached light beam is converted into address information and the access-restriction code.

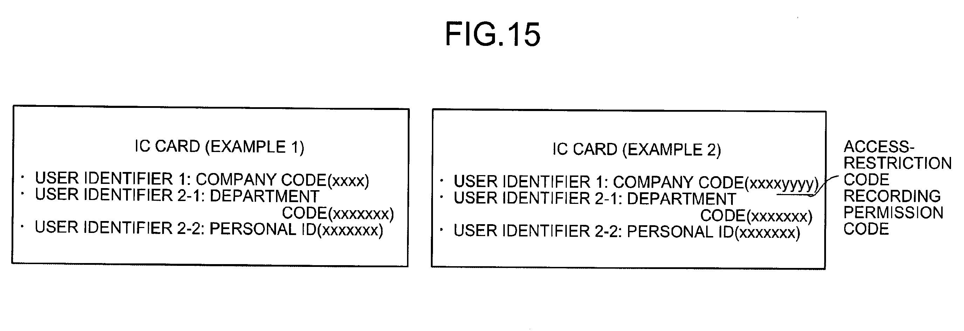

Given below is an explanation of the IC card 340 shown in Fig. 8. Fig. 15 is an exemplary diagram of the IC card 340 shown in Fig. 8. As shown in the figure, Example 1 includes a company code as the user identifier 1, a department code and a personal ID (Identification) as the user identifiers 2. Example 2 includes, in addition to the codes shown in Example 1, a restriction-code recording permission code for permitting recording of the access-restriction code. That is, the IC card of Example 1 cannot record the access-restriction code on a rewritable area. On the other hand, the IC card of Example 2 can record the access-restriction code on a rewritable area.

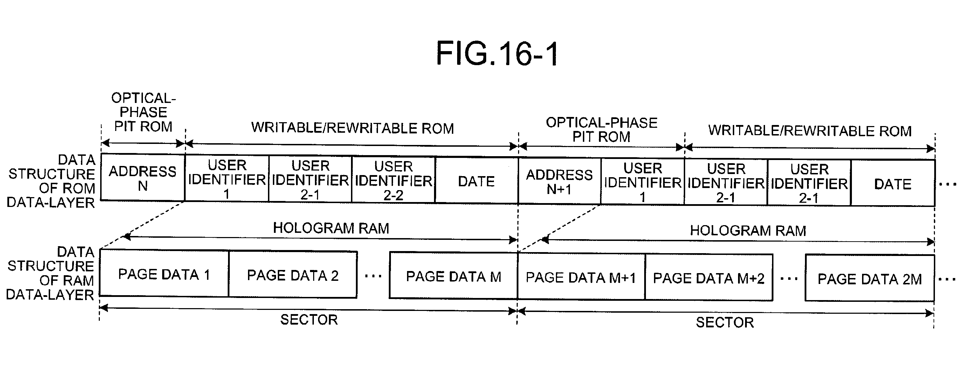

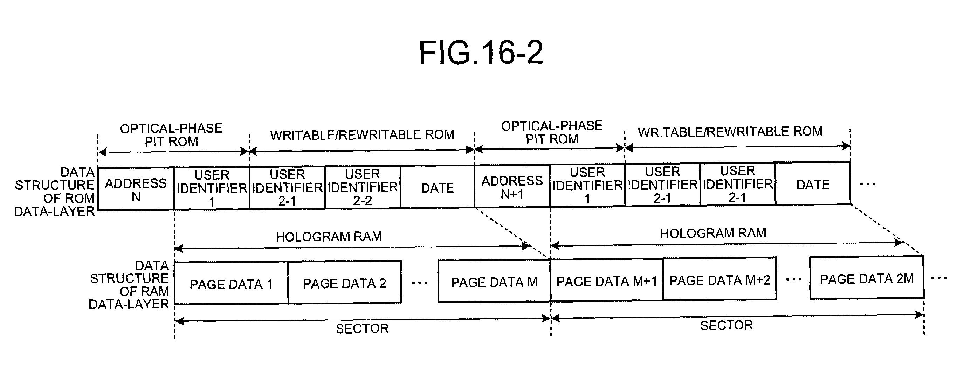

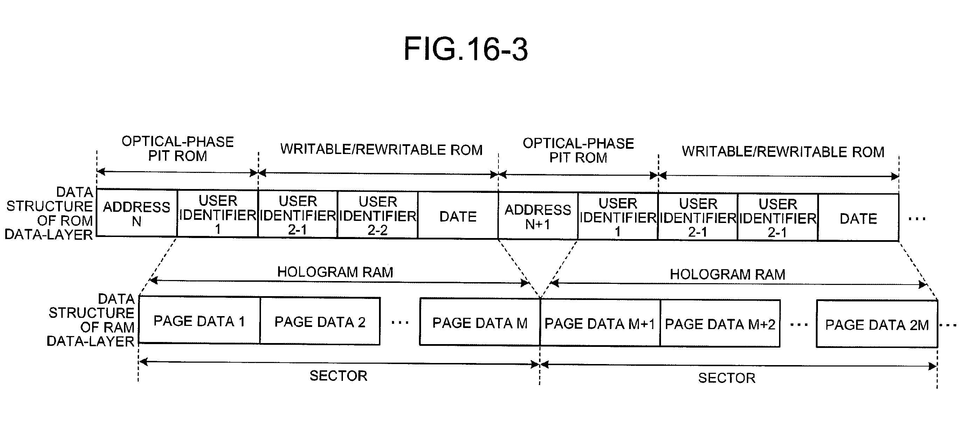

Figs. 16-1, 16-2, and 16-3 are explanatory diagrams for explaining a relation between the access-restriction code recorded on the ROM data-layer and user data recorded on the RAM data-layer. As shown in these figures, the user identifier 1 is recorded as optical-phase pits following its address. The user identifier 1 can be recorded on a lead-in area of the optical information recording medium 50 in the ROM data-layer. The comparison can be performed at lead-in when the optical information recording medium 50 is inserted into the optical information recording/reproducing apparatus, thus the comparison of comparing the user identifier 1 following its address can be skipped.

The user identifier 2 and the date code are recorded on a rewritable area. The order of the user identifier 2 and the date code is not limited to those shown in Figs. 16-1, 16-2, and 16-3.

Although the page data for each page looks separate, because the page data is recorded by using shift multiplexing, the page data for each page can be overlapped with each other depending on its multiplicity. As shown in the figures, a recording sector of the RAM data-layer corresponds to a portion starting from a code start position of the user identifier 1 recorded on the ROM data-layer and ending at an end position of the date code.

Because the conventional laser beam disks, such as conventional DVDs, employs bit-by-bit for recording data by using reflectance-factor change, which is induced by a laser beam having a diameter of 1 $\mu$m or narrower close to the diffraction-limited value, in extremely small areas, the address area is useless from the viewpoint of a recording area.

However, the present embodiment uses a transmission interference pattern for recording data on the RAM data-layer. In hologram recording by using a transmission interference pattern, the transmission interference pattern to be recorded on the RAM data-layer is about 100 $\mu$m that is extremely wider than the beam close to the diffraction-limited value.

As a result, a start position of a transmission interference pattern recorded on the RAM data-layer substantially agrees with an address start position in the ROM data-layer even when data is recorded from the address-area end position. It can be said that there is no useless area with respect to recording data on the ROM data-layer. In other words, a physical position of each sector of the ROM data-layer substantially agrees with a physical position of a corresponding virtual sector of the RAM data-layer with respect to the vertical direction.

As shown in Fig. 16-2, it is possible to record data in such a manner that an end position of a RAM data-layer section corresponding to the address area N substantially agrees with an end position of an address area N+1. As shown in Fig. 16-3, it is possible to record data in such another manner that both a start position of a RAM data-layer record-section corresponding to the address area N+1 and an end position of a RAM data-layer record section corresponding to the address area N, which is immediately before the address area N+1, are positioned in the address area N+1. Timing pits for recording information on the RAM data-layer or reproducing information from the RAM data-layer are formed on the ROM data-layer as optical-phase pits or wobble in its initial state.

The optical information recording medium 50 can includes a plurality of ROM data-layers and a plurality of RAM data-layers lying in the depth direction. Fig. 17 is an explanatory diagram for explaining correspondence relation between the ROM data-layers and the RAM data-layers in which the ROM data-layers lie in the depth direction of the optical information recording medium. An address on the ROM data-layer contains a layer number that is used for a servo control of selecting a ROM data-layer.

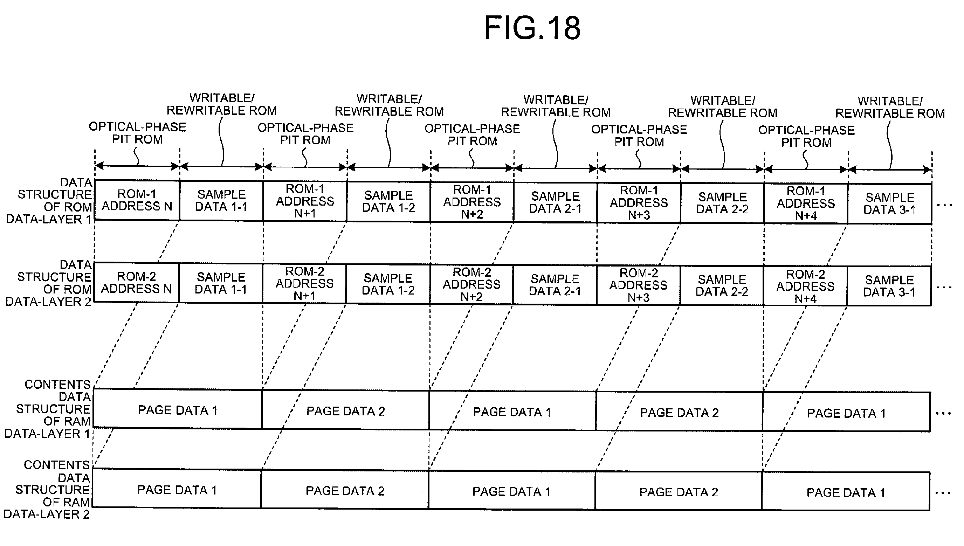

Given below is an explanation of a process performed by the optical information recording/reproducing apparatus according to the present embodiment of acquiring contents via the Internet and recording acquired contents on the optical information recording medium. Fig. 18 is an explanatory diagram for explaining correspondence relation between a ROM data-layer and a RAM data-layer of the optical information recording medium when contents acquired via the Internet are recorded thereon.

A user buys such an optical information recording medium that shown in Fig. 18 (or obtains it for free), and reproduces sample data (i.e., sample data is information on a sample of music, movie, or image) recorded on a ROM data-layer from the optical information recording medium with the optical information recording/reproducing apparatus. At this moment, no data is recorded on the RAM data-layer.

Specifically, in the optical information recording/reproducing apparatus, the controller 300 operates the optical pickup unit 200 to acquire sample data corresponding to a target address, and sends acquired sample data to the host computer 400.

If the user likes contents of the sample data that is reproduced by the optical information recording/reproducing apparatus, the user accesses to a distributor site, to which the sample data belongs, displayed on a display of the host computer 400 to request regular contents corresponding to the sample data (although the host computer 400 accesses to the distributor site in the above explanation, the optical information recording/reproducing apparatus can access the distributor site to acquire the contents).

The user buys the contents by using the host computer 400 following an approach that the system of the distributor site specifies and sends a request for distribution of the purchased contents. When the optical information recording/reproducing apparatus receives the contents corresponding to the sample data from the host computer 400, the controller 300 operates the optical pickup unit 200 to record the contents on a position on the RAM data-layer corresponding to the sample data in the ROM data-layer.

Contents corresponding to a single unit of sample data is recorded on the RAM data-layer of the optical information recording medium. A volume of contents is some dozens of times as much as a volume of its corresponding sample data.

The optical information recording/reproducing apparatus records contents on the RAM data-layer such that a physical position of the contents recorded on the RAM data-layer substantially agrees with a physical position of its corresponding sample data recorded on the ROM data-layer with respect to the depth direction of the optical information recording medium.

As shown in an example of Fig. 18, data forming a single unit of sample data is recorded on two sectors on the ROM data-layer. A physical position of each sector on the ROM data-layer agrees with a physical position of its corresponding virtual sector on the RAM data-layer with respect to the vertical direction. In other words, the number of units of the sample data and the number of contents corresponding to the sample data always agree with each other. Moreover, because data capacity of the sector on the RAM data-layer is large, the sample data and its contents having different data volumes are recorded on the optical information recording medium in a correspondence manner.

Such a record layout relation between the sample data and its contents facilitates processing between the sample data and its contents and hardware or software processing involving the optical information recording medium.

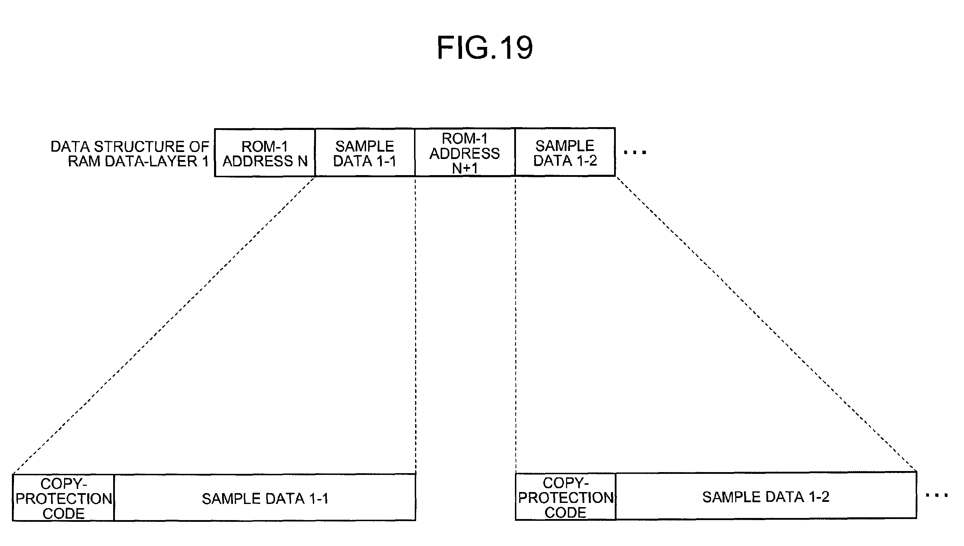

If the sample data contains a copy-protection code, in a similar manner for the access-restriction code as is explained with reference to the figures including Fig. 8, the access-restriction code-data detecting unit 260 detects the copy-protection code and sends the detected copy-protection code to the controller 300 so that the optical information recording/reproducing apparatus can perform a copy-protection control. Fig. 19 is an exemplary diagram for explaining a data array when a copy-protection code is embedded into the sample data shown in Fig. 18.

For example, when a copy request for copying page data that is recorded on the RAM data-layer and a serial number from the host computer 400 is received, the comparing unit 320 compares a copy-protection code contained in sample data corresponding to the page data with the serial number. When it is determined that both codes agree with each other, the controller 300 operates the optical pickup unit 200 to copy the page data to the optical information recording medium 50 (or another optical information recording medium).

As described above, various access-restriction codes can be embedded into the optical information recording medium according to the present invention, which ensures high-leveled security including copyright management and protection from data leak or falsification.

According to the present invention, when receiving a reproduction request or the like from the host computer 400, the controller 300 sends only presence information on a RAM area of the RAM data-layer to the host computer 400, it means that, the controller 300 does not send information on the access-restriction code, i.e., information recorded on the ROM data-layer to the host computer 400.

The host computer 400 cannot acquire the access-restriction code recorded on the ROM data-layer. It means that it is virtually impossible for an un-authorized third party to read an access-restriction code recorded on the ROM data-layer to falsify the access-restriction code by operating the OS (Operating System) in an illegal manner.

The optical information recording medium having the RAM data-layer on which no contents, e.g., music or movie contents, are recorded in the initial state is described with reference to Fig. 18. However, it is possible to use an optical information recording medium having a RAM data-layer on which some contents are recorded in the initial state and put limitations including a number of reproductions and an effective period of the recorded contents.

As described above, in the optical information recording/reproducing apparatus according to the present embodiment, the controller 300 operates the optical pickup unit 200 to acquire sample data recorded on the ROM layer of the optical information recording medium, and sends the acquired sample data to the host computer 400. When acquiring contents corresponding to the sample data, the controller 300 operates the optical pickup unit 200 to record the contents on the RAM data-layer in such a manner that the recorded contents is in correspondence with its sample data recorded on the ROM data-layer, which facilitates processing between the sample data and its contents and hardware or software processing involving the optical information recording medium.

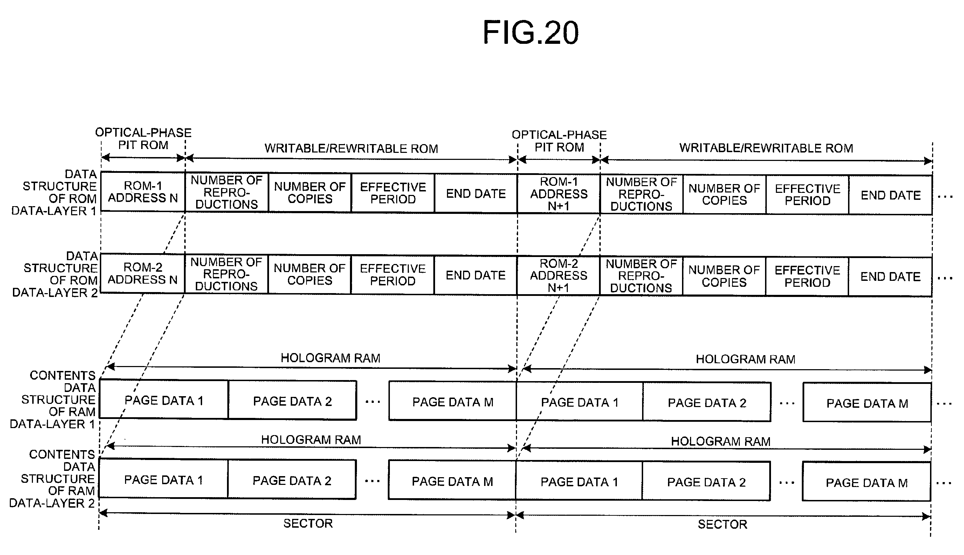

Given below is an explanation of a ROM data-layer and a RAM data-layer of another optical information recording medium in which contents, e.g., music or movie contents, is recorded on its RAM data-layer in the initial state. Fig. 20 is an explanatory diagram for explaining the ROM data-layer and the RAM data-layer of the optical information recording medium in which contents, e.g., music or movie contents, is recorded onto its RAM data-layer in the initial state. As shown in Fig. 20, a number of reproductions, a number of copies, an effective period, and an end date are recorded on a rewritable area on the ROM data-layer as the access-restriction codes. An authorized administrator can rewrite the number of reproductions, the number of copies, the effective period, and the end date recorded on the ROM data-layer.

For example, the number of reproductions or the number of copies decreases by one every time contents corresponding to the access-restriction code the ROM data-layer is reproduced or replicated.

The effective period on the ROM data-layer is an effective period counted from a date when an access to the contents is accepted. When the controller 300 operates the optical pickup unit 200 to access to the contents on the optical information recording medium, a date-and-time that is acquired from the clock 350 is recorded onto a recording area for the effective period as the first access date-and-time.

When the controller 300 of the optical information recording/reproducing apparatus access to the same contents again, a date-and-time is acquired from the clock 350, and the first access date-and-time is subtracted from the acquired current date-and-time. When obtained difference is within the effective period, it is permitted to reproduce the contents.

When an end date of the contents is set on the ROM data-layer, an expiration date of reproduction of the contents reproduction is specified. It is impossible to reproduce or copy the contents, that is, it is possible to protect its copyright. An audience start date-and-time can be recorded on the ROM data-layer, though omitted in Fig. 20. If the audience start date-and-time is used as one of the access-restriction codes and is set to an opening day of cinema, it is possible to take influence on the box-office sales into consideration.

Given below is an explanation of a process of updating the access-restriction code recorded on the ROM data-layer of the optical information recording medium shown in Fig. 20. The key unique-code of the IC card does not use in the update process. The contents recorded on the RAM data-layer are reproduced by the optical pickup unit 200 shown in Fig. 8.

First, the optical pickup unit 100 accesses to an address on the ROM data-layer corresponding to the contents recorded on the RAM data-layer, and acquires access-restriction codes (including the number of reproductions, the number of copies, the effective period, and the end date) that are corresponding to the accessed address. Then, the access-restriction code-data detecting unit 160 detects the access-restriction codes, and the address-information detecting unit 150 detects the address.

The controller 300 determines whether conditions represented by the access-restriction codes are satisfied. When it is determined that reproduction of the contents is not allowable, that is, the number of reproductions is larger than a permitted number of reproductions, or it is beyond the effective period or the end date, the reproduction process goes to end.

When the controller 300 determines that reproduction of the contents is allowable, the access-restriction codes and the address information corresponding to the access-restriction codes are temporally recorded on a memory 1 of the controller 300. Some dozens MB is enough for a range of contents that obtains reproduction permission at each time, though variable depending on the memory capacity, specifications of reproduction speed, or designing concept of the manufacturer.

When the controller 300 determines that reproduction of the contents recorded on the RAM data-layer is allowable, the optical pickup unit 200 reads the contents on the RAM data-layer and records the contents on a memory 3 of the controller 300 in a sequential manner. The controller 300 sends the contents recorded on the memory 3 to the host computer 400.

The optical pickup unit 200 reads the access-restriction codes corresponding to the target contents to be reproduced from the ROM data-layer, the access-restriction code-data detecting unit 260 detects the access-restriction codes, and the address-information detecting unit 250 detects the address information. The controller 300 sequentially compares the access-restriction codes detected by the access-restriction code-data detecting unit 260 and the address information detected by the address-information detecting unit 250 with the access-restriction codes and the address information recorded on the memory 1 for verification. When inconsistent information is found, reproduction of the contents goes to end.

While the optical pickup unit 200 reproduces the contents, the optical pickup unit 100 reads access-restriction codes and address information corresponding to next contents to be reproduced, and temporarily records the read information on a memory 2 of the controller 300. When the temporal recording has finished, the controller 300 performs the process of updating access-restriction codes corresponding to the contents that is reproduced by the optical pickup unit 200.

Under control of the controller 300, the optical pickup unit 100 accesses to the address where the access-restriction codes corresponding to the contents that is reproduced by the optical pickup unit 200, and updates the access-restriction codes.

More specifically, the number of reproductions recorded on the ROM data-layer is updated to a value smaller by one than the latest recorded value that is recorded on the memory 1. If the contents are copied, the number of copies recorded on the ROM data-layer is updated to a value smaller by one than the value that is recorded on the memory 1.

A new effective period is calculated based on the first start date-and-time detected from the clock 350. The effective period recorded on the ROM data-layer is updated based on the calculated effective period. The end date recorded on the ROM data-layer is compared with a current date-and-time shown by the clock 350. The controller 300 determines whether it is beyond the end date. When it is beyond the end date, the contents cannot be reproduced.

The controller 300 performs update verification each time the access-restriction codes corresponding to the reproduced contents are updated. That is, the controller 300 compares the updated access-restriction code and the address information corresponding to the updated access-restriction code with the old access-restriction code and the old address information before update temporarily recorded on the memory 1 for verification.

When the update verification has finished, the controller 300 moves the address information and the access-restriction codes to be reproduced to the memory 1. By referring to the address information recorded on the memory 1, the optical pickup unit 200 starts reproducing the next contents to be reproduced, and stores the next contents in the memory 3. The memory 3 always is in the state of storing some contents to be reproduced. The optical information recording/reproducing apparatus repeats the above process.

As described above, in the optical information recording/reproducing apparatus according to the present embodiment, the controller 300 operates the optical pickup unit 100 to acquire the access-restriction codes (number of reproductions, number of copies, effective period, and end date) recorded on the ROM data-layer of the optical information recording medium, and determines based on the acquired access-restriction codes whether it is allowable to reproduce information recorded on the RAM data-layer. When the reproduction is allowable, the information recorded on the RAM data-layer is sent to the host computer 400. This allows improving reliability of the information recorded on the optical information recording medium.

Moreover, because the access-restriction codes that are recorded on the ROM data-layer of the optical information recording medium are recorded on a rewritable area, the authorized administrator can flexibly change those access-restriction codes according to intended use.

INDUSTRIAL APPLICABILITY

As set forth hereinabove, the optical information recording/reproducing apparatus and the optical information recording medium according to an aspect of the present invention are suitable for preventing falsification of restriction information by un-authorized third parties while receiving a change of the restriction information from an authorized administrator in a flexible manner.

**Claims**

1. An optical information recording/reproducing apparatus for recording or reproducing information on or from an optical information recording medium by emitting a light beam to the optical information recording medium, the optical information recording medium including a first recording layer on which information is recorded and a second recording layer on which restriction information is recorded, the restriction information being used for restricting output of the information recorded on the first recording layer, the optical information recording/reproducing apparatus comprising:

   an acquiring unit that acquires the information recorded on the first recording layer and the restriction information corresponding to the information at one time; and
   a determining unit that determines, based on the restriction information acquired by the acquiring unit, whether the information acquired by the acquiring unit from the first recording layer is to be output.

2. The optical information recording/reproducing apparatus according to claim 1, wherein
   the restriction information includes number-of-reproduction information indicative of a permitted number of reproductions of the information recorded on the first recording layer, and wherein
   the optical information recording/reproducing apparatus further comprises an updating unit that updates, when the determining unit determines that the information recorded on the first recording layer is to be output, the number-of-reproduction information of the restriction information that is recorded on the second recording layer corresponding to output information.

3. The optical information recording/reproducing apparatus according to claim 1, wherein
   the restriction information includes number-of-copy information indicative of a permitted number of copies of the information recorded on the first recording layer, and wherein
   the optical information recording/reproducing apparatus further comprises an updating unit that updates, when the determining unit determines that the information recorded on the first recording layer is to be output, the number-of-copy information of the restriction information recorded on the second recording layer corresponding to output information.

4. The optical information recording/reproducing apparatus according to claim 1, wherein the restriction information includes output-period information indicative of a period in which the information recorded on the first recording layer is permitted to be output.

5. The optical information recording/reproducing apparatus according to claim 1, wherein the restriction information includes end-time information indicative of an end time which the information recorded on the first recording layer is permitted to be output.

6. The optical information recording/reproducing apparatus according to claim 4 or 5, further comprising an updating unit that updates the output-period information and/or the end-time information.

7. An optical information recording/reproducing apparatus for recording or reproducing information on or from an optical information recording medium by emitting a light beam to the optical information recording medium, the optical information recording medium including a first recording layer on which sample information is recorded and a second recording layer on which information corresponding to the sample information recorded on the first recording layer is recorded, the optical information recording/reproducing apparatus comprising:

   an information acquiring unit that acquires, when receiving a request for acquiring the information corresponding to the sample information recorded on the first recording layer, the information corresponding to the requested sample information; and

a recording unit that records information acquired by the information acquiring unit, in association with the sample information recorded, on the first recording layer on a recording area of the second recording layer.

8. The optical information recording/reproducing apparatus according to claim 7, wherein sample information and address information are recorded on the first recording layer, the sample information being a sample of music, video, and/or image, the address information indicating a location where regular information corresponding to the sample information is recorded,

the information acquiring unit acquires the regular information concerning the sample information based on the address information, and

the recording unit records the regular information acquired by the information acquiring unit, in association with the sample information recorded on the first recording layer, on the recording area of the second recording layer.

9. The optical information recording/reproducing apparatus according to claim 8, wherein
restriction information is recorded on the first recording layer, the restriction information being used for restricting the information recorded on the second recording layer to be output, and wherein
the optical information recording/reproducing apparatus further comprises a determining unit that determines based on the restriction information, when receiving a request for outputting the information recorded on the second recording layer, whether to permit the information recorded on the second recording layer to be output.

10. An optical information recording medium on which information is recorded by using interference of light beams, the optical information recording medium comprising:

a first recording layer on which the information is recorded; and
a second recording layer on which restriction information is recorded, the restriction information being used for restricting output of the information recorded on the first recording layer in a recording area thereof that is accessed together with the information recorded on the first recording layer.

11. The optical information recording medium according to claim 10, wherein the restriction information includes at least one of number-of-reproduction information indicative of a permitted number of reproductions of the information recorded on the first recording layer, number-of-copy information indicative of a permitted number of copies of the information recorded on the first recording layer, output-period information indicative of a period in which the information recorded on the first recording layer is permitted to be output, and end-time information indicative of an end time which the information recorded on the first recording layer is permitted to be output.

12. An optical information recording medium on which information is recorded by using interference of light beams, the optical information recording medium comprising:

a first recording layer on which sample information and address information are recorded, the address information indicating a location where regular information corresponding to the sample information is recorded; and
a second recording layer on which the regular information corresponding to the sample information recorded on the first recording layer is recorded.

13. The optical information recording medium according to claim 12, wherein the sample information is a sample of music, video, and/or image.

14. The optical information recording medium according to claim 13, wherein restriction information is recorded on the first recording layer, the restriction information being used for restricting output of the information recorded on the second recording layer.

# FIG.1

11
SEGMENT

13
LENS
APERTURE

12
SEGMENT
BOUNDARY

14
ON SEGMENT

15
OFF SEGMENT

Y AXIS

X AXIS

10
SPATIAL LIGHT
MODULATION
ELEMENT

# FIG.2

LIGHT INTENSITY

(ALTERNATELY APPLY VOLTAGE A AND VOLTAGE B)

RECORDING SIGNAL
LIGHT LEVEL
(APPLIED VOLTAGE A)

REFERENCE LIGHT LEVEL
(APPLIED VOLTAGE B)

WHERE, B>A

DISTANCE IN X
AXIS DIRECTION
ON CERTAIN Y
AXIS

... SEGMENT SEGMENT SEGMENT

# FIG.3

DIFFRACTIVE INTERFERENCE PATTERN

OBJECTIVE LENS

EQUIVALENT

$p = a + 1/2b + c + 1/2d + e + f + 1/2g + h$

$q = 1/2b \quad r = 1/2d \quad s = 1/2g$

23

# FIG.4

RECORDING SIGNAL LIGHT/
REFERENCE LIGHT

SPATIAL LIGHT
MODULATION
ELEMENT
10

OPTICAL-PHASE
CORRECTION ELEMENT
21

20
SPATIAL-LIGHT-INTENSITY
MODULATION ELEMENT
(WITH PHASE CHANGE)

LIGHT BEAM

# FIG.5

OPTICAL-PHASE
CORRECTION ELEMENT
21

TFT COUNTER
ELECTRODE
33a

34
POLARIZING PLATE

33
GLASS SUBSTRATE

32
LIQUID CRYSTAL

31
GLASS SUBSTRATE

31a
MATRIX TFT SEGMENT

30
POLARIZING
PLATE

24

# FIG.6-1

POLARIZING PLATE
34

GLASS SUBSTRATE
33

GLASS SUBSTRATE
31

35
LIQUID CRYSTAL
MOLECULES

30
POLARIZING PLATE

# FIG.6-2

POLARIZING PLATE
34

GLASS SUBSTRATE
33

GLASS SUBSTRATE
31

35
LIQUID CRYSTAL
MOLECULES

30
POLARIZING
PLATE

# FIG.7

# FIG.8

EP 1 912 210 A1

# FIG.9

50

SPINDLE MOTOR

DETECTION LENS 54

47
OBJECTIVE LENS

S-POLARIZED LIGHT

S-POLARIZED LIGHT

POLARIZATION BEAM SPLITTER
46

MAGNIFYING LENS 52

CONVERGENT LENS 49

CMOS SENSOR 53

PINHOLE 51

S-POLARIZED LIGHT

55
PHOTO-DETECTOR

45
HALF MIRROR CUBE

CONJUGATE FOCUS CONVERSION LENS
44

48
POLARIZER

43
POLARIZATION CONVERSION ELEMENT

OPTICAL-PHASE CORRECTION ELEMENT
21

20
SPATIAL-LIGHT-INTENSITY MODULATION ELEMENT

P-POLARIZED LIGHT

42
1/2-WAVELENGTH PLATE

41
COLLIMATOR LENS

SHORT-WAVELENGTH LASER
40

# FIG.10

SET VALUE TO WIDTH OF LIGHT BEAM OF
COLLIMATOR LENS 41 OR LARGER

SECOND CONJUGATE
FOCUS CONVERSION LENS
61

62

PUSH-PULL
MECHANISM

63
TRANSPARENT
SUBSTRATE     60
FIRST CONJUGATE
FOCUS CONVERSION LENS

SET VALUE TO WIDTH OF LIGHT BEAM OF
COLLIMATOR LENS 41 OR LARGER

# FIG.11

TRANSPARENT RESIN 509
REFLECTIVE LAYER 510
SUBSTRATE 511
ADDRESS INFORMATION
REFLECTIVE LAYER 510
ACCESS-RESTRICTION CODE
ADDRESS AREA
ACCESS-RESTRICTION CODE AREA
ADDRESS INFORMATION
ACCESS-RESTRICTION CODE
SEMI-TRANSPARENT REFLECTIVE LAYER 508
PROTECTIVE LAYER 507
SEMI-TRANSPARENT REFLECTIVE LAYER 506
505 PROTECTIVE LAYER
504 RECORDING LAYER
503 PROTECTIVE LAYER
TRANSPARENT SUBSTRATE 502
501 PROTECTIVE LAYER

EP 1 912 210 A1

# FIG.12

TRANSPARENT RESIN 509

SUBSTRATE 511

ADDRESS INFORMATION

ADDRESS AREA

ACCESS-RESTRICTION CODE AREA

ACCESS-RESTRICTION CODE RECORDING LAYER 512

ADDRESS INFORMATION

ACCESS-RESTRICTION CODE

ACCESS-RESTRICTION CODE 513

SEMI-TRANSPARENT REFLECTIVE LAYER 506

ACCESS-RESTRICTION RECORDING LAYER 507

PROTECTIVE LAYER 505

RECORDING LAYER 504

PROTECTIVE LAYER

PROTECTIVE LAYER 503

502 TRANSPARENT SUBSTRATE

501 PROTECTIVE LAYER

EP 1 912 210 A1

# FIG.13

ADDRESS + AUTHENTICATION-IDENTIFICATION AREA

ACCESS-RESTRICTION CODE AREA

511 SUBSTRATE

509 TRANSPARENT RESIN

506 SEMI-TRANSPARENT REFLECTIVE LAYER

505 PROTECTIVE LAYER

504 RECORDING LAYER

503 PROTECTIVE LAYER

502 TRANSPARENT SUBSTRATE

501 PROTECTIVE LAYER

47 OBJECTIVE LENS

P-POLARIZED LIGHT BEAM

S-POLARIZED LIGHT BEAM (POSITIONAL CONTROL)

EP 1 912 210 A1

# FIG.14

ADDRESS + AUTHENTICATION-IDENTIFICATION AREA

ACCESS-RESTRICTION CODE AREA

511 SUBSTRATE

509 TRANSPARENT RESIN

506 SEMI-TRANSPARENT REFLECTIVE LAYER

505 PROTECTIVE LAYER

504 RECORDING LAYER

503 PROTECTIVE LAYER

502 TRANSPARENT SUBSTRATE

501 PROTECTIVE LAYER

47 OBJECTIVE LENS

SERVO BEAM BY CONJUGATE FOCUS CONVERSION LENS 44

P-POLARIZED LIGHT BEAM

S-POLARIZED LIGHT BEAM (POSITIONAL CONTROL)

ACCESS TO FIRST ROM DATA-LAYER

P-POLARIZED LIGHT BEAM

S-POLARIZED LIGHT BEAM (POSITIONAL CONTROL)

EP 1 912 210 A1

# FIG.15

EP 1 912 210 A1

IC CARD (EXAMPLE 1)

· USER IDENTIFIER 1: COMPANY CODE(xxxx)
· USER IDENTIFIER 2-1: DEPARTMENT
                        CODE(xxxxxxx)
· USER IDENTIFIER 2-2: PERSONAL ID(xxxxxxx)

IC CARD (EXAMPLE 2)

· USER IDENTIFIER 1: COMPANY CODE(xxxxyyyy)
· USER IDENTIFIER 2-1: DEPARTMENT
                        CODE(xxxxxxx)
· USER IDENTIFIER 2-2: PERSONAL ID(xxxxxxx)

ACCESS-
RESTRICTION
CODE
RECORDING
PERMISSION
CODE

# FIG.16-1

# FIG.16-2

# FIG.16-3

EP 1 912 210 A1

# FIG.17

| | OPTICAL-PHASE PIT ROM | | WRITABLE/REWRITABLE ROM | | | OPTICAL-PHASE PIT ROM | | WRITABLE/REWRITABLE ROM | | |
|---|---|---|---|---|---|---|---|---|---|---|
| DATA STRUCTURE OF ROM DATA-LAYER 1 | ROM-1 ADDRESS N | USER IDENTIFIER 1 | USER IDENTIFIER 2-1 | USER IDENTIFIER 2-2 | DATE | ROM-1 ADDRESS N+1 | USER IDENTIFIER 1 | USER IDENTIFIER 2-1 | USER IDENTIFIER 2-1 | DATE ... |
| DATA STRUCTURE OF ROM DATA-LAYER 2 | ROM-2 ADDRESS N | USER IDENTIFIER 1 | USER IDENTIFIER 2-1 | USER IDENTIFIER 2-2 | DATE | ROM-2 ADDRESS N+1 | USER IDENTIFIER 1 | USER IDENTIFIER 2-1 | USER IDENTIFIER 2-2 | DATE ... |

HOLOGRAM RAM | HOLOGRAM RAM

| DATA STRUCTURE OF RAM DATA-LAYER 1 | PAGE DATA 1 | PAGE DATA 2 | ... | PAGE DATA M | PAGE DATA M+1 | PAGE DATA M+2 | ... | PAGE DATA M | ... |

HOLOGRAM RAM | HOLOGRAM RAM

| DATA STRUCTURE OF RAM DATA-LAYER 2 | PAGE DATA 1 | PAGE DATA 2 | ... | PAGE DATA M | PAGE DATA M+1 | PAGE DATA M+2 | ... | PAGE DATA M | ... |

SECTOR | SECTOR

EP 1 912 210 A1

# FIG.18

# FIG.19

EP 1 912 210 A1

# FIG.20

## INTERNATIONAL SEARCH REPORT

| International application No. |
|---|
| PCT/JP2005/014228 |

A. CLASSIFICATION OF SUBJECT MATTER
*G11B7/005*(2006.01), *G11B20/10*(2006.01), *G11B20/12*(2006.01)

According to International Patent Classification (IPC) or to both national classification and IPC

B. FIELDS SEARCHED

Minimum documentation searched (classification system followed by classification symbols)
*G11B7/00*(2006.01)-*G11B7/013*(2006.01), *G11B20/10*(2006.01), *G11B20/12*
(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 9-305093 A (Sony Corp.),<br>28 November, 1997 (28.11.97),<br>Par. Nos. [0075], [0076]<br>(Family: none) | 1-14 |
| Y | JP 2005-135513 A (Fujitsu Ltd.),<br>26 May, 2005 (26.05.05),<br>Par. Nos. [0026], [0034], [0087], [0088],<br>[0116]<br>& US 2005/0094516 A1 | 1-14 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 28 April, 2006 (28.04.06) | 16 May, 2006 (16.05.06) |

| Name and mailing address of the ISA/<br>Japanese Patent Office | Authorized officer |
|---|---|
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H6202820 A
- JP 2003036595 A
- JP 2003115163 A